# EUROPEAN PATENT APPLICATION

(11) **EP 4 535 851 A1**
(43) Date of publication of application: **09.04.2025**
(21) Application number: 23818916.1
(22) Date of filing: 18.05.2023
(51) Int. Cl.: H04W 24/02

(54) **VOICE FALLBACK INFORMATION PROCESSING METHOD AND APPARATUS, TERMINAL AND NETWORK SIDE DEVICE**

(30) Priority: 25.05.2022 CN 202210578928
(71) Applicant: Datang Mobile Communications Equipment Co., Ltd., Beijing 100085 (CN)
(72) Inventor: LIU, Ziqiao, Beijing 100085 (CN); WANG, Ruiwei, Beijing 100085 (CN)
(74) Representative: Studio Torta S.p.A.
(86) International application number: PCT/CN2023/095008
(87) International publication number: WO 2023/236751

(57) **Abstract**

This application provides information processing method and apparatus for voice fallback, a terminal and a network-side device. The method includes: recording, by the terminal, first relevant information of a failure in a case that the terminal accesses a first target network-side device and the failure occurs, where the first target network-side device is a network device that the terminal requests access due to inter-system voice fallback; and transmitting, by the terminal, the first relevant information to a second target network-side device, where the second target network-side device is a network device that the terminal successfully accesses after the failure occurs to access to the first target network-side device.

## Description

### CROSS-REFERENCE TO RELATED APPLICATION

This application claims a priority to Chinese Patent Application No. 202210578928.2 filed in China on May 25, 2022, the disclosure of which is incorporated by reference herein in its entirety.

### TECHNICAL FIELD

This application relates to the field of communications technology, in particular to information processing method and apparatus for voice fallback, a terminal and a network-side device.

### BACKGROUND

Mobility Robustness Optimisation (Mobility Robustness Optimisation, MRO) is mainly used to solve a failure problem during a mobility process of a terminal and assist in network optimization. The MRO feature is mainly used to discover and solve parameter configuration problems during the mobility process, and defines three failure types: too early handover, too late handover, and handover to a wrong cell.

The inter-system handover report (Inter-system handover Report) of current non-access stratum (Non-Access Stratum, NAS) signaling only includes too early handover and unnecessary handover, and does not include the type of handover to a wrong cell. Therefore, a signaling indication method in a network handover process in the related technologies is not applicable to a scenario of handover to a wrong cell under voice fallback services.

### SUMMARY

This application is to provide information processing method and apparatus for voice fallback, a terminal and a network-side device, so as to solve the problem that the signaling indication method in a network handover process in the related technologies is not suitable a scenario of handover to a wrong cell under voice fallback services.

An embodiment of this application provides an information processing method for voice fallback, including:
recording, by a terminal, first relevant information of a failure, in a case that the terminal accesses a first target network-side device and the failure occurs, where the first target network-side device is a network device that the terminal requests access due to inter-system voice fallback; and
transmitting, by the terminal, the first relevant information to a second target network-side device, where the second target network-side device is a network device that the terminal successfully accesses after the failure occurs to access to the first target network-side device.

Optionally, the case that the terminal accesses the first target network-side device and the failure occurs includes one of the following:
the terminal successfully handovers from a source network-side device to the first target network-side device, and a radio link failure (Radio Link Failure, RLF) occurs within a first duration; or,
after the terminal enters an RRC_idle state by releasing a radio resource control (Radio Resource Control, RRC) connection with a source network-side device, the terminal successfully redirects to the first target network-side device, and an RLF occurs within a first duration; or,
a handover failure occurs during the terminal handovers from a source network-side device to the first target network-side device; or,
after the terminal enters an RRC_idle state by releasing an RRC connection with a source network-side device, a failure occurs during a process of initiating random access to the first target network-side device;
where the source network-side device is a network-side device that is accessed by the terminal before performing inter-system voice fallback.

Optionally, the first relevant information includes at least one of the following:
an identification of the first target network-side device;
an identification of a source network-side device that is accessed by the terminal before performing inter-system voice fallback;
an identification of the second target network-side device;
carrier information of the first target network-side device;
a priority of the first target network-side device; or
voice fallback indication.

Optionally, the recording the first relevant information of the failure includes:
recording the first relevant information of the failure according to a defined coding format, where the defined coding format includes one of the following:
a network coding format corresponding to a mobile communication system to which a source network-side device that is accessed by the terminal before performing inter-system voice fallback belongs;
a network coding format corresponding to a mobile communication system to which the first target network-side device belongs;
a network coding format corresponding to a mobile communication system to which the second target network-side device belongs.

Optionally, the method further includes:
receiving a handover command or an RRC release message that carries voice fallback indication; and
accessing the first target network-side device from a source network-side device that is currently accessed, according to the handover command or the RRC release message.

An embodiment of this application provides a network optimization method for voice fallback, including:
receiving, by a source network-side device, first relevant information of a terminal access failure transmitted by a target network-side device, where the first relevant information is relevant information recorded by a terminal when an access failure occurs in performing inter-system voice fallback; and
performing, by the source network-side device, network optimization on a voice fallback related parameter according to the first relevant information.

Optionally, the receiving, by the source network-side device, the first relevant information of the terminal access failure transmitted by the target network-side device includes:
receiving, by the source network-side device, second relevant information transmitted by a second target network-side device, where the second relevant information includes the first relevant information; and/or receiving third relevant information transmitted by a first target network-side device, where the third relevant information includes the first relevant information,
where the first target network-side device is a network device that the terminal requests access due to inter-system voice fallback, and the second target network-side device is a network device that the terminal successfully accesses after the failure occurs to access to the first target network-side device.

Optionally, the second relevant information and/or the third relevant information further includes: indication information indicating that a failure type is handover to a wrong cell, and the performing, by the source network-side device, network optimization on the voice fallback related parameter according to the first relevant information includes:
parsing the second relevant information and/or the third relevant information to determine that the failure type of the access failure is handover to the wrong cell; and
performing network optimization on the voice fallback related parameter according to the first relevant information, where an optimized network parameter is used to prioritize handover the terminal to a network-side device other than the first target network-side device when performing inter-system voice fallback.

Optionally, the second relevant information and/or the third relevant information further includes: indication information indicating that a failure type is inter-system mobility failure during voice fallback,
the performing, by the source network-side device, network optimization on the voice fallback related parameter according to the first relevant information includes:
parsing the second relevant information and/or the third relevant information to determine that the failure type of the access failure is inter-system mobility failure during voice fallback; and
performing network optimization on the voice fallback related parameter according to the first relevant information, where an optimized network parameter is used to prioritize handover the terminal to a network-side device other than the first target network-side device when performing inter-system voice fallback.

Optionally, the first relevant information includes at least one of the following:
an identification of a first target network-side device;
an identification of the source network-side device;
an identification of a second target network-side device;
carrier information of a first target network-side device;
a priority of a first target network-side device; or
voice fallback indication.

An embodiment of this application provides an information processing method for voice fallback, including:
receiving, by a second target network-side device, first relevant information transmitted by a terminal, where the first relevant information is relevant information recorded by a terminal when an access failure occurs in performing inter-system voice fallback; and
transmitting, by the second target network-side device according to the first relevant information, second relevant information of the access failure of the terminal to a source network-side device that is accessed by the terminal before performing inter-system voice fallback, where the second relevant information includes the first relevant information; and/or, transmitting the first relevant information to a first target network-side device,
where the first target network-side device is a network device that the terminal requests access due to inter-system voice fallback.

Optionally, the transmitting, according to the first relevant information, the second relevant information of the access failure of the terminal to the source network-side device that is accessed by the terminal before performing inter-system voice fallback includes:
parsing the first relevant information to determine that a failure type of the access failure of the terminal is handover to a wrong cell; and
transmitting the second relevant information to the source network-side device, where the second relevant information includes indication information indicating that the failure type is handover to the wrong cell.

Optionally, the transmitting, according to the first relevant information, the second relevant information of the access failure of the terminal to the source network-side device that is accessed by the terminal before performing inter-system voice fallback includes:
parsing the first relevant information to determine that the failure type of the access failure of the terminal is inter-system mobility failure during voice fallback; and
transmitting the second relevant information to the source network-side device, where the second relevant information includes indication information indicating that the failure type is inter-system mobility failure during voice fallback.

Optionally, the transmitting, according to the first relevant information, the second relevant information of the access failure of the terminal to the source network-side device that is accessed by the terminal before performing inter-system voice fallback includes: transmitting the second relevant information through a first interface to the source network-side device that is accessed by the terminal before performing inter-system voice fallback.

Optionally, the transmitting the first relevant information to the first target network-side device includes: transmitting a failure indication to the first target network-side device, where the failure indication includes the first relevant information.

An embodiment of this application provides an information processing method for voice fallback, including:
receiving, by a first target network-side device, first relevant information transmitted by a second target network-side device, where the first relevant information is relevant information recorded by a terminal when an access failure occurs in performing inter-system voice fallback; and
transmitting, by the first target network-side device according to the first relevant information, third relevant information of the access failure of the terminal to a source network-side device that is accessed by the terminal before performing inter-system voice fallback, where the third relevant information includes the first relevant information,
where the second target network-side device is a network device that the terminal successfully accesses after a failure occurs to access to the first target network-side device.

Optionally, the transmitting, according to the first relevant information, the third relevant information of the access failure of the terminal to the source network-side device that is accessed by the terminal before performing inter-system voice fallback includes:
parsing the first relevant information to determine that a failure type of the access failure of the terminal is handover to a wrong cell; and
transmitting the third relevant information to the source network-side device, where the third relevant information includes indication information indicating that the failure type is handover to the wrong cell.

Optionally, the transmitting, according to the first relevant information, the third relevant information of the access failure of the terminal to the source network-side device that is accessed by the terminal before performing inter-system voice fallback includes:
parsing the first relevant information to determine that a failure type of the access failure of the terminal is inter-system mobility failure during voice fallback; and
transmitting the third relevant information to the source network-side device, where the third relevant information includes indication information indicating that the failure type is inter-system mobility failure during voice fallback.

Optionally, the receiving the first relevant information transmitted by the second target network-side device includes: receiving a failure indication transmitted by the second target network-side device, where the failure indication includes the first relevant information.

An embodiment of this application provides a terminal, including: a memory, a transceiver and a processor. The memory is configured to store a computer program; the transceiver is configured to transmit and receive data under the control of the processor; the processor is configured to read the computer program in the memory to perform the following operations: recording first relevant information of a failure in a case that the terminal accesses a first target network-side device and the failure occurs, where the first target network-side device is a network device that the terminal requests access due to inter-system voice fallback. The transceiver is configured to: transmit the first relevant information to a second target network-side device, where the second target network-side device is a network device that the terminal successfully accesses after the failure occurs to access to the first target network-side device.

Optionally, the case that the terminal accesses the first target network-side device and the failure occurs includes one of the following:
the terminal successfully handovers from a source network-side device to the first target network-side device, and a radio link failure (RLF) occurs within a first duration;
after the terminal enters an RRC_idle state by releasing a radio resource control (RRC) connection with a source network-side device, the terminal successfully redirects to the first target network-side device, and an RLF occurs within a first duration;
a handover failure occurs when the terminal handovers from a source network-side device to the first target network-side device;
after the terminal enters an RRC_idle state by releasing an RRC connection with a source network-side device, a failure occurs during a process of initiating random access to the first target network-side device,
where the source network-side device is a network-side device that is accessed by the terminal before performing inter-system voice fallback.

Optionally, the first relevant information includes at least one of the following:
an identification of the first target network-side device;
an identification of a source network-side device that is accessed by the terminal before performing inter-system voice fallback;
an identification of the second target network-side device;
carrier information of the first target network-side device;
a priority of the first target network-side device; or
voice fallback indication.

Optionally, the processor is further configured to read the computer program in the memory to perform the following operations:
recording the first relevant information of the failure according to a defined coding format, where the defined coding format includes one of the following:
a network coding format corresponding to a mobile communication system to which a source network-side device that is accessed by the terminal before performing inter-system voice fallback belongs;
a network coding format corresponding to a mobile communication system to which the first target network-side device belongs;
a network coding format corresponding to a mobile communication system to which the second target network-side device belongs.

Optionally, the transceiver is configured to transmit and receive data under the control of the processor to perform the following operations:
receiving a handover command or an RRC release message that carries voice fallback indication; and
accessing the first target network-side device from a source network-side device that is currently accessed, according to the handover command or the RRC release message.

An embodiment of this application provides a network-side device, including a memory, a transceiver and a processor. The memory is configured to store a computer program; the processor is configured to read the computer program in the memory; the transceiver is configured to transmit and receive data under the control of the processor to perform the following operations: receiving first relevant information of a terminal access failure transmitted by a target network-side device, where the first relevant information is relevant information recorded by a terminal when an access failure occurs in performing inter-system voice fallback. The processor is configured to read the computer program in the memory to perform the following operations: performing network optimization on a voice fallback related parameter according to the first relevant information.

Optionally, the transceiver is specifically configured to transmit and receive data under the control of the processor to perform the following operations:
receiving second relevant information transmitted by a second target network-side device, where the second relevant information includes the first relevant information; and/or receiving third relevant information transmitted by a first target network-side device, where the third relevant information includes the first relevant information,
where the first target network-side device is a network device that the terminal requests access due to inter-system voice fallback, and the second target network-side device is a network device that the terminal successfully accesses after the failure occurs to access to the first target network-side device.

Optionally, the second relevant information and/or the third relevant information further includes: indication information indicating that a failure type is handover to a wrong cell. The processor is configured to read the computer program in the memory to perform the following operations:
parsing the second relevant information and/or the third relevant information to determine that the failure type of the access failure is handover to the wrong cell; and
performing network optimization on the voice fallback related parameter according to the first relevant information, where an optimized network parameter is used to prioritize handover the terminal to a network-side device other than the first target network-side device when performing inter-system voice fallback.

Optionally, the second relevant information and/or the third relevant information further includes: indication information indicating that a failure type is inter-system mobility failure during voice fallback. The processor is configured to read the computer program in the memory to perform the following operations:
parsing the second relevant information and/or the third relevant information, and determining that the failure type of the access failure is inter-system mobility failure during voice fallback; and
performing network optimization on the voice fallback related parameter according to the first relevant information, where an optimized network parameter is used to prioritize handover the terminal to a network-side device other than the first target network-side device when performing inter-system voice fallback.

Optionally, the first relevant information includes at least one of the following:
an identification of a first target network-side device;
an identification of the source network-side device;
an identification of a second target network-side device;
carrier information of a first target network-side device;
a priority of a first target network-side device; or
voice fallback indication.

An embodiment of this application provides a network-side device, including a memory, a transceiver and a processor. The memory is configured to store a computer program; the processor is configured to read the computer program in the memory; the transceiver is configured to transmit and receive data under the control of the processor to perform the following operations:
receiving first relevant information transmitted by a terminal, where the first relevant information is relevant information recorded by a terminal when an access failure occurs in performing inter-system voice fallback; and
transmitting, according to the first relevant information, second relevant information of the access failure of the terminal to a source network-side device that is accessed by the terminal before performing inter-system voice fallback, where the second relevant information includes the first relevant information; and/or, transmitting the first relevant information to a first target network-side device,
where the first target network-side device is a network device that the terminal requests access due to inter-system voice fallback.

Optionally, the processor is configured to read the computer program in the memory to perform the following operations: parsing the first relevant information to determine that a failure type of the access failure of the terminal is handover to a wrong cell. The transceiver is configured to transmit and receive data under the control of the processor to perform the following operations: transmitting the second relevant information to the source network-side device, where the second relevant information includes indication information indicating that the failure type is handover to the wrong cell.

Optionally, the processor is configured to read the computer program in the memory to perform the following operations: parsing the first relevant information to determine that the failure type of the access failure of the terminal is inter-system mobility failure during voice fallback. The transceiver is configured to transmit and receive data under the control of the processor to perform the following operations: transmitting the second relevant information to the source network-side device, where the second relevant information includes indication information indicating that the failure type is inter-system mobility failure during voice fallback.

Optionally, the transceiver is configured to transmit and receive data under the control of the processor to perform the following operations: transmitting the second relevant information through a first interface to the source network-side device that is accessed by the terminal before performing inter-system voice fallback.

Optionally, the transceiver is configured to transmit and receive data under the control of the processor to perform the following operations: transmitting a failure indication to the first target network-side device, where the failure indication includes the first relevant information.

An embodiment of this application provides a network-side device, including a memory, a transceiver and a processor. The memory is configured to store a computer program; the processor is configured to read the computer program in the memory; the transceiver is configured to transmit and receive data under the control of the processor to perform the following operations:
receiving first relevant information transmitted by a second target network-side device, where the first relevant information is relevant information recorded by a terminal when an access failure occurs in performing inter-system voice fallback; and
transmitting, according to the first relevant information, third relevant information of the access failure of the terminal to a source network-side device that is accessed by the terminal before performing inter-system voice fallback, where the third relevant information includes the first relevant information,
where the second target network-side device is a network device that the terminal successfully accesses after the failure occurs to access to the first target network-side device.

Optionally, the processor is configured to read the computer program in the memory to perform the following operations: parsing the first relevant information to determine that a failure type of the access failure of the terminal is handover to a wrong cell. The transceiver is further configured to: transmit the third relevant information to the source network-side device, where the third relevant information includes indication information indicating that the failure type is handover to the wrong cell.

Optionally, the processor is configured to read the computer program in the memory to perform the following operations: parsing the first relevant information to determine that a failure type of the access failure of the terminal is inter-system mobility failure during voice fallback. The transceiver is further configured to transmit and receive data under the control of the processor to perform the following operations: transmitting the third relevant information to the source network-side device, where the third relevant information includes indication information indicating that the failure type is inter-system mobility failure during voice fallback.

Optionally, the transceiver is configured to transmit and receive data under the control of the processor to perform the following operations: receiving a failure indication transmitted by the second target network-side device, where the failure indication includes the first relevant information.

An embodiment of this application provides an information processing apparatus for voice fallback, including:
a recording unit, configured to record first relevant information of an access failure in a case that a terminal accesses a first target network-side device and the failure occurs, where the first target network-side device is a network device that the terminal requests access due to inter-system voice fallback; and
a first transmitting unit, configured to transmit the first relevant information to a second target network-side device, where the second target network-side device is a network device that the terminal successfully accesses after the failure occurs to access to the first target network-side device.

An embodiment of this application provides a network optimization apparatus for voice fallback, including:
a first receiving unit, configured to receive first relevant information of a terminal access failure transmitted by a target network-side device, where the first relevant information is relevant information recorded by a terminal when an access failure occurs in performing inter-system voice fallback; and
a processing unit, configured to perform network optimization on a voice fallback related parameter according to the first relevant information.

An embodiment of this application provides an information processing apparatus for voice fallback, including:
a second receiving unit, configured to receive first relevant information transmitted by a terminal, where the first relevant information is relevant information recorded by a terminal when an access failure occurs in performing inter-system voice fallback; and
a second transmitting unit, configured to transmit, according to the first relevant information, second relevant information of the access failure of the terminal to a source network-side device that is accessed by the terminal before performing inter-system voice fallback, where the second relevant information includes the first relevant information; and/or, transmitting the first relevant information to a first target network-side device,
where the first target network-side device is a network device that the terminal requests access due to inter-system voice fallback.

An embodiment of this application provides an information processing apparatus for voice fallback, including:
a third receiving unit, configured to receive first relevant information transmitted by a second target network-side device, where the first relevant information is relevant information recorded by a terminal when an access failure occurs in performing inter-system voice fallback; and
a third transmitting unit, configured to transmit, according to the first relevant information, third relevant information of the access failure of the terminal to a source network-side device that is accessed by the terminal before performing inter-system voice fallback, where the third relevant information includes the first relevant information,
where the second target network-side device is a network device that the terminal successfully accesses after the failure occurs to access to the first target network-side device.

An embodiment of this application provides a processor-readable storage medium, on which a computer program is stored. The computer program is executed by a processor to implement steps of the above information processing method for voice fallback, or to implement steps of the above network optimization method for voice fallback.

The above technical solutions of this application have the following beneficial effects. In the embodiments of this application, the terminal requests access to the first target network-side device when performing inter-system voice fallback, and records the first relevant information when access to the first target network-side device fails; the terminal transmits the first relevant information to the second target network-side device that has been successfully accessed. In this way, the network-side device can perform network optimization for voice fallback based on the first relevant information.

### BRIEF DESCRIPTION OF THE DRAWINGS

FIG. 1 shows a first schematic flow chart of an information processing method for voice fallback according to an embodiment of this application;
FIG. 2 shows a schematic flow chart of a network optimization method for voice fallback according to an embodiment of this application;
FIG. 3 shows a second schematic flow chart of an information processing method for voice fallback according to an embodiment of this application;
FIG. 4 shows a third schematic flow chart of an information processing method for voice fallback according to an embodiment of this application;
FIG. 5 shows a first schematic structural diagram of an information processing apparatus for voice fallback according to an embodiment of this application;
FIG. 6 shows a schematic structural diagram of a network optimization apparatus for voice fallback according to an embodiment of this application;
FIG. 7 shows a second schematic structural diagram of an information processing apparatus for voice fallback according to an embodiment of this application;
FIG. 8 shows a third schematic structural diagram of an information processing apparatus for voice fallback according to an embodiment of this application;
FIG. 9 shows a schematic structural diagram of a terminal according to an embodiment of this application; and
FIG. 10 shows a schematic structural diagram of a network-side device of this application.

### DETAILED DESCRIPTION

In order to make a to-be-solved technical problem, a technical solution and advantages of this application clearer, a detailed description will be given below in conjunction with the accompanying drawings and specific embodiments. In the following description, specific details such as specific configurations and components are provided merely to assist in a comprehensive understanding of the embodiments of this application. Therefore, those skilled in the art should be appreciated that various changes and modifications can be made to the embodiments described herein without departing from the scope and spirit of this application. In addition, for clarity and conciseness, descriptions of known functions and constructions have been omitted.

It should be appreciated that "an embodiment" or "one embodiment" mentioned throughout the specification means that specific features, structures, or characteristics related to the embodiment are included in at least one embodiment of this application. Therefore, words "in an embodiment" or "in one embodiment" appearing throughout the entire specification may not necessarily refer to the same embodiment. In addition, these specific features, structures, or characteristics may be combined in one or more embodiments in any suitable manner.

In various embodiments of this application, it should be appreciated that the size of a sequence number of each of the following processes does not imply the order of execution, and the execution order of each process should be determined based on the function and internal logic of the each process, which should not constitute any limitations on the implementation process of this application.

The term "and/or" in the embodiments of this application describes an association relationship of associated objects, indicating that there may be three types of relationships. For example, A and/or B, which may represent three situations of A alone, both A and B, and B alone. The character "/" generally indicates that the associated objects before and after the character is in an "or" relationship.

The term "multiple" in the embodiments of this application refers to two or more, and other quantifiers are similar thereto.

The technical solution of embodiments of this application will be clearly and completely described hereinafter in conjunction with the accompanying drawings. Apparently, the described embodiments merely relate to a part of, rather than all of, the embodiments of this application, and based on these embodiments, a person of ordinary skill in the art may obtain other embodiments without creative effort, which shall also fall within the scope of this application.

Specifically, an embodiment of this application provides an information processing method for voice fallback, which solves the problem that a signaling indication method in a network handover process in the related technologies is not applicable to a scenario of handover to a wrong cell or inter-system mobility failure caused by voice fallback under voice fallback services.

The handover to a wrong cell or inter-system mobility failure during voice fallback may refer to that: a terminal fails to access a target cell during a handover process; or a terminal accesses a target cell successfully but a radio link failure occurs soon, and the terminal initiates RRC connection reestablishment, attempting to access another cell that is different from a handover target cell and a source cell.

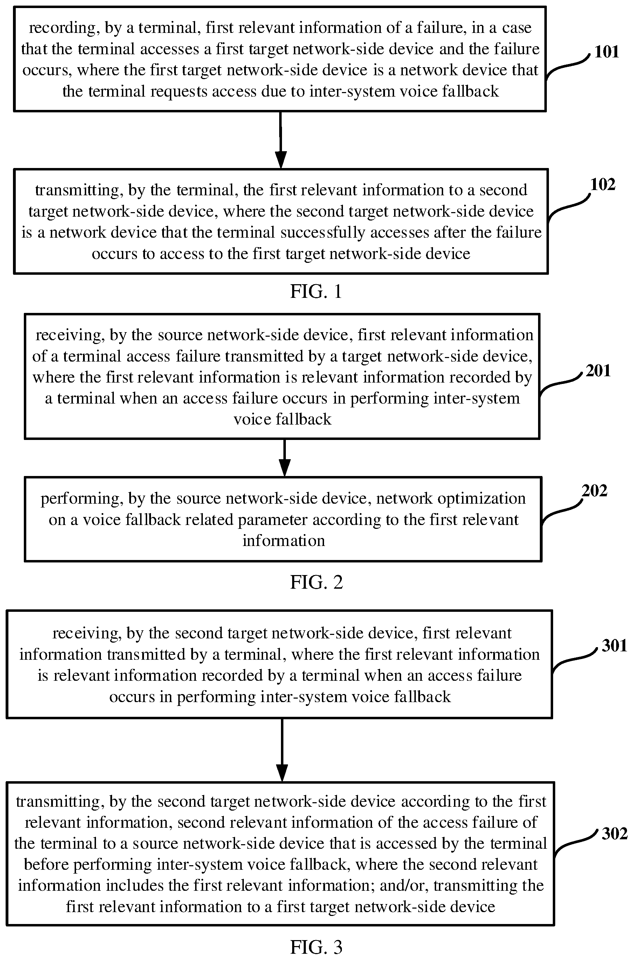

As shown in FIG. 1, an embodiment of this application provides an information processing method for voice fallback, which is applied to a terminal and specifically includes the following steps.

Step 101: recording, by a terminal, first relevant information of a failure, in a case that the terminal accesses a first target network-side device and the failure occurs, where the first target network-side device is a network device that the terminal requests access due to inter-system voice fallback.

The inter-system voice fallback refers to the inter-system fallback caused by a voice service. For example, if a terminal currently accesses a 5G communication system (that is, accessing a 5G base station), and the inter-system fallback is caused by a call service, the current 5G base station will handover to a 2G/3G/4G base station for the terminal, or the 5G base station first releases the terminal to an idle (idle) state, and then the terminal accesses a 2G/3G/4G base station to achieve the inter-system fallback.

The case that the terminal accesses the first target network-side device and the failure occurs may refer to that the terminal fails to access the first target network-side device from a source network-side device that is currently accessed. The source network-side device may be a source base station accessed by the terminal before performing inter-system voice fallback, and the first target network-side device may be a target base station that the terminal requests access due to inter-system voice fallback. If the terminal fails to access the target base station from the source base station, the terminal records first relevant information of the access failure. Optionally, the recording the first relevant information by the terminal may include: recording relevant information of the access failure in a target report, and the target report is, for example, UE VarRLF-Report, RACH Report, a new report, etc.

Optionally, the source network-side device that is accessed by the terminal before performing inter-system voice fallback and the first target network-side device that the terminal requests access are different communication systems. For example, the source network-side device is a 5G communication system, and the first target network-side device is a 2G/3G/4G communication system.

Step 102, transmitting, by the terminal, the first relevant information to a second target network-side device, where the second target network-side device is a network device that the terminal successfully accesses after the failure occurs to access to the first target network-side device. The first relevant information may be used for network optimization for voice fallback.

If the terminal fails to access the first target network-side device, the terminal may reselect another network device to access, such as accessing the second target network-side device. If the terminal successfully accesses the second target network-side device, the terminal may transmit the first relevant information for network optimization to the second target network-side device that has been successfully accessed. The second target network-side device and the first target network-side device may a same communication system. For example, the second target network-side device and the first target network-side device are both 4G communication systems. The second target network-side device and the first target network-side device may also be different communication systems. For example, the first target network-side device is a 4G communication system, and the second target network-side device is a 3G communication system.

The second target network-side device may also be a same communication system as the source network-side device that is accessed by the terminal before performing inter-system voice fallback. For example, the source network-side device is 5G base station 1. The second target network-side device is 5G base station 2 that the terminal accesses at a later time after performing inter-system voice fallback.

Optionally, after receiving the first relevant information, the second target network-side device may determine a failure type of the terminal access failure by parsing the first relevant information, and may transmit the failure type and/or the first relevant information to the source network-side device that is accessed by the terminal before performing inter-system voice fallback, so that the source network-side device performs network optimization for voice fallback based on the failure type and/or the first relevant information. Alternatively, after receiving the first relevant information, the second target network-side device transmits the unparsed first relevant information to the source network-side device, and the source network-side device may parse the first relevant information to determine the failure type of the terminal access failure, and may perform network optimization for voice fallback based on the first relevant information.

In the embodiment of this application, the terminal requests access to the first target network-side device when performing inter-system voice fallback, and records the first relevant information when a failure occurs to access to the first target network-side device; the terminal transmit the first relevant information to the second target network-side device that has been successfully accessed, so that the network-side device performs network optimization for voice fallback based on the first relevant information.

Optionally, the method further includes: receiving a handover command or an RRC release message that carries voice fallback indication; and accessing the first target network-side device from a source network-side device that is currently accessed, according to the handover command or the RRC release message.

In the embodiment, when the terminal needs to perform a voice service, the currently accessed source network-side device transmits a handover command (handover command) or an RRC release (release) message to the terminal. If the handover command or the RRC release message includes voice fallback indication (voice fallback indication), the terminal can know that this handover/release is caused by voice fallback, and performs inter-system voice fallback according to the handover command or the RRC release message. If the terminal fails to access the first target network-side device from the source network-side device, the terminal record first relevant information of the access failure. Optionally, when the terminal records the first relevant information, the first relevant information may include the voice fallback indication.

Optionally, the terminal may transmit the first relevant information to the second target network-side device according to the instruction of the second target network-side device. After recording the first relevant information, the terminal may notify the second target network-side device of that the terminal stores the first relevant information of the access failure. For example, when user equipment (User Equipment, UE) is transmitting an RRC setup complete (RRC SetupComplete) message, an RRC resume complete (RRCResumeComplete) message, or an RRC reestablishment complete (RRC Reestablishment Complete) message, information available indication (such as the rlf-InfoAvailable indication) may be carried to notify the second target network-side device of that the UE stores the recorded relevant information of the access failure, and the network-side device may obtain specific failure information records from the UE through UE Information Request/UE Information Response (UEInformationRequest/UEInformationResponse) messages.

Optionally, the first relevant information includes at least one of the following:
1) an identification of the first target network-side device, i.e., a cell ID of a failed cell (failed cell ID);
2) an identification of the source network-side device (pervious cell ID) accessed by the terminal before performing inter-system voice fallback;
3) an identification of the second target network-side device, i.e., a reconnect/reestablishment cell ID (reconnect/reestablishment cell ID), where the second target network-side device that is accessed by the terminal when an access to the first target network-side device fails is preset in the first relevant information;
4) carrier information of the first target network-side device; where the carrier information may be used for network optimization by the source network-side device, for example, determining whether the first target network-side device is suitable for a terminal to access based on the carrier information;
5) a priority of the first target network-side device; where the priority may be used for network optimization by the source network-side device, for example, determining whether to allow the terminal to access the first target network-side device according to the priority;
6) voice fallback (voice fallback) indication; where the voice fallback indication may be used to trigger network optimization, for example, when detecting the voice fallback indication, the source network-side device performs network optimization according to the first relevant information.

Optionally, the recording the first relevant information of the access failure includes: recording the first relevant information of the failure according to a defined coding format, where the defined coding format includes one of the following.
1) A network coding format corresponding to a mobile communication system to which the source network-side device that is accessed by the terminal before performing inter-system voice fallback. For example, if the first relevant information is recorded in an RLF report, and the source network-side device is 5G base station, the RLF report may be coded according to a 5G coding format.
2) A network coding format corresponding to a mobile communication system to which the first target network-side device belongs. For example, if the first relevant information is recorded in an RLF report, and the first target network-side device is a 4G base station, the RLF report may be coded according to a 4G coding format.
3) A network coding format corresponding to a mobile communication system to which the second target network-side device belongs. For example, if the first relevant information is recorded in an RLF report, and the first target network-side device is a 3G base station, the RLF report may be coded according to a 3G coding format.

As an optional embodiment, the case that the terminal accesses the first target network-side device and the failure occurs includes one of the following.
(1) The terminal successfully handovers from a source network-side device to the first target network-side device, and a radio link failure (RLF) occurs within a first duration. The source network-side device is a network-side device that is accessed by the terminal before performing inter-system voice fallback.

The source network-side device is a network device that is accessed by the terminal before handover, and the first duration may be set according to a requirement of determining a failure of the terminal accessing the network-side device. When the terminal needs to perform a voice service, a network handover is triggered, and the terminal needs to handover from the currently accessed source network-side device to the first target network-side device. If the terminal successfully handovers to the first target network-side device, but the RLF occurs within the first duration, the terminal needs to re-select a new network-side device for reestablishment.

For example, if UE needs to answer/make a call to trigger inter-system fallback, and a source network-side device accessed by the UE is a 5G base station, then a handover from the 5G base station to a 4G base station 1 (i.e., the first target network-side device) is successful, and soon an RLF occurs, in this case, the UE reestablishes connection to a new 4G base station 2 (that is, the second target network-side device).

The UE transmits the recorded first relevant information to the 4G base station 2, and may transmit the same to the 5G base station through the 4G base station 2. The 5G base station receives the first relevant information and performs network optimization for voice fallback.

(2) After the terminal enters an RRC_idle state by releasing a radio resource control (RRC) connection with a source network-side device, the terminal successfully redirects to the first target network-side device, and an RLF occurs within a first duration. The source network-side device is a network-side device that is accessed by the terminal before performing inter-system voice fallback.

When the terminal needs to perform a voice service, network redirection is triggered, the source network-side device that is accessed by the terminal releases the terminal to the RRC_idle state, and the terminal is redirected to the first target network-side device. If the terminal successfully redirects to the first target network-side device, but an RLF occurs within the first duration, the terminal needs to reselect a new network-side device for reestablishment.

For example, if a UE needs to answer/make a call to trigger inter-system fallback, and a source network-side device accessed by the UE is a 5G base station, after the 5G base station first releases the UE to the RRC_idle state, the UE successfully redirects to a 4G base station 1 (i.e., the first target network-side device), and an RLF occurs soon at the 4G base station 1, in this case, the UE reestablish a connection to a 4G base station 2 (that is, the second target network-side device).

The UE transmits the recorded first relevant information to the 4G base station 2, and may transmit it to the 5G base station through the 4G base station 2. The 5G base station receives the first relevant information and performs network optimization for voice fallback.

(3) A handover failure occurs when the terminal handovers from a source network-side device to the first target network-side device. The source network-side device is a network-side device that is accessed by the terminal before performing inter-system voice fallback.

When the terminal needs to perform a voice service, network handover is triggered, and the terminal needs to handover from the source network-side device to the first target network-side device. If the terminal fails to handover from the source network-side device to the first target network-side device (a failure occurs during a handover process), the terminal needs to re-select a new network-side device for reestablishment.

For example, if a UE needs to answer/make a call to trigger inter-system fallback, the source network-side device accessed by the UE is a 5G base station, and a handover from the 5G base station to the 4G base station 1 fails (a failure occurs during the handover process), the UE reestablishes a connection to a new 4G base station 2.

The UE transmits the recorded first relevant information to the 4G base station 2, and may transmit it to the 5G base station through the 4G base station 2. The 5G base station receives the first relevant information and performs network optimization for voice fallback.

(4) After the terminal enters an RRC_idle state by releasing an RRC connection with a source network-side device, a failure occurs during a process of initiating random access to the first target network-side device. The source network-side device is a network-side device that is accessed by the terminal before performing inter-system voice fallback.

When the terminal needs to perform a voice service, network fallback is triggered, the source network-side device that is accessed by the terminal releases the terminal to the RRC_idle state, the terminal is redirected to the first target network-side device, but the random access fails; in this case, the terminal needs to re-select a new network-side device for reestablishment.

The UE transmits the recorded first relevant information to the 4G base station 2, and may transmit it to the 5G base station through the 4G base station 2. The 5G base station receives the first relevant information and performs network optimization for voice fallback.

For the above four scenarios where the terminal fails to access the first target network-side device from the source network-side device, the second target network-side device may report relevant information about the terminal access failure to the source network-side device in different ways, which will be described below through examples.

In scenario (1) and scenario (2), that is, if the terminal successfully handovers from the source network-side device to the first target network-side device, and a radio link failure (RLF) occurs within a first duration, the terminal reestablishes a connection to the second target network-side device; or, after the terminal enters an RRC_idle state by releasing a radio resource control (RRC) connection with the source network-side device, if the terminal successfully redirects to the first target network-side device, and an RLF occurs within a first duration, and the terminal reestablishes a connection to the second target network-side device. After receiving the first relevant information, the second target network-side device may transmit relevant information about the access failure to the source network-side device through the first target network-side device; or, the second target network-side device directly transmits the first relevant information to the source network-side device; or, after parsing the first relevant information, the second target network-side device transmits relevant information of the access failure to the source network-side device..

An example is given that the source network-side device is a 5G base station 1, the first target network-side device is a 4G base station 1, the second target network-side device is a 4G base station 2 or a 5G base station 2, and the first relevant information includes an RLF report.
a) The UE reports the RLF report to the 4G base station 2 according to instruction of the 4G base station 2. After receiving the RLF report, the 4G base station 2 transmits a failure indication (failure indication) to the 4G base station 1, and the failure indication includes the RLF report. The 4G base station 1 parses the RLF report and finds that a failure type of the terminal access failure is handover to a a wrong cell (to a wrong cell) or voice fallback leading to inter-system mobility failure, and the RLF report includes voice fallback indication. The 4G base station 1 transmits an inter-system handover report (Inter-system HO Report) to the 5G base station 1, or a new signaling is introduced to carry one or more of the following information:
   a type of handover to a wrong cell or inter-system mobility failure during voice fallback;
   voice fallback (voice fallback) indication (trigger handover/RRCrelease);
   failed cell ID (failed cell ID);
   previous cell ID (previous cell ID);
   reconnect/reestablishment cell ID (reconnect/reestablishment cell ID);
   RLF report.
   After receiving the above information, the 5G base station 1 performs network optimization for voice fallback.
b) The UE reports the RLF report to the 4G base station 2 according to the instruction of the 4G base station 2, and carries a source cell ID of the 5G base station. After receiving the RLF report, the 4G base station 2 transmits the unparsed RLF report to the 5G base station 1 through an X2 interface. The 5G base station 1 may obtain relevant information of the access failure recorded by the UE by parsing the RLF report, and may analyze and obtain the failure type of the access failure.
c) The UE reports the RLF report to the 5G base station 2 according to the instruction of the 5G base station 2, that is, the second target network-side device in the embodiment is the 5G base station 2. Specifically, after the UE accesses the 5G base station 2 at a certain moment, the UE transmits the RLF report to the 5G base station 2. After parsing the RLF report, the 5G base station 2 transmits a failure type of handover to a wrong cell or inter-system mobility failure during voice fallback parsed according to the RLF report, and/or the RLF report to the 5G base station 1. The 5G base station 1 may perform network optimization based on the information obtained by parsing the RLF report.

In scenario (3), that is, a handover failure occurs during the terminal handover from the source network-side device to the first target network-side device, the terminal reestablishes a connection to the second target network-side device. Due to the handover failure, the second target network-side device receives the first relevant information, and directly transmits the first relevant information to the source network-side device.

An example is given that the source network-side device is 5G base station 1, the first target network-side device is 4G base station 1, the second target network-side device is 4G base station 2, and the first relevant information includes an RLF report.

When a UE initiates synchronization reconfiguration procedure but T304 expires, UE records failure relevant information into UE variable report (VarRLF-Report). When the UE transmits an RRCReconfigurationComplete message, rlf-InfoAvailable indication may be carried to notify the 4G base station 2 of that the UE saves recorded information related to a handover failure. The 4G base station 2 may obtain the specific failure information record (i.e., RLF report) from the UE through a UEInformationRequest/UEInformationResponse message.

The UE reports the RLF report to the 4G base station 2 according to instruction. The 4G base station 2 directly transmits inter-system failure indication (inter-system failure indication) to the 5G base station 1, which carries the RLF report. The 5G base station 1 parses the RLF report, and may determine that a type of the handover failure is handover to a wrong cell or inter-system mobility failure during voice fallback. The 5G base station 1 may perform network optimization based on the information obtained by parsing the RLF report.

In the embodiment, for the above scenarios (1), (2) and (3), under inter-system voice fallback, the type of handover to a wrong cell or inter-system mobility failure during voice fallback is recorded in Inter-system HO Report/a new inter-system related report, and is used by the source network-side device for network optimization of inter-system voice fallback.

In the above scenario (4), that is, after the terminal releases an RRC connection with the source network-side device to enter an RRC_idle state, a failure occurs during a process of initiating random access to the first target network-side device, and the terminal reestablishes a connection to the second target network-side device. After receiving the first relevant information, the second target network-side device may transmit information related to the access failure to the source network-side device through the first target network-side device; or, the second target network-side device directly transmits the first relevant information to the source network-side device; or, after parsing the first relevant information, the second target network-side device transmits information related to the access failure to the source network-side device.

Another example is given that the source network-side device is 5G base station 1, the first target network-side device is 4G base station 1, the second target network-side device is 4G base station 2 or 5G base station 2, and the first relevant information includes a RACH report (may also be an RLF report or other newly defined report).
i) A UE reports the RACH report to the 4G base station 2 according to instruction of the 4G base station 2. After receiving the RACH report, the 4G base station 2 transmits the RACH report to the 4G base station 1 through X2 signaling. The 4G base station 1 parses the RACH report and finds that a failure type of the terminal access failure is handover to a wrong cell or inter-system mobility failure during voice fallback. The 4G base station 1 transmits information content and the failure type obtained by parsing the RACH report to the 5G base station 1.
   The information transmitted to the 5G base station 1 may include one or more of the following:
   a type of handover to a wrong cell or inter-system mobility failure during voice fallback;
   voice fallback indication;
   failed cell ID;
   previous cell ID;
   reconnect/reestablishment cell ID;
   RACH report;
   carrier information of a redirected cell (such as carrier information of the 4G base station 1);
   a priority of a redirection cell (such as a priority of the 4G base station 1).
ii) The UE reports the RACH report to the 4G base station 2 according to the instruction of the 4G base station 2, and carries a source cell ID of the 5G base station. After receiving the RACH report, the 4G base station 2 transmits the unparsed RACH report to the 5G base station 1 through the X2 interface. The 5G base station 1 parses the RACH report, may obtain relevant information of the access failure recorded by the UE, and may parse it to obtain the failure type of the access failure.
iii) The UE reports the RACH report to the 5G base station 2 according to the instruction of the 5G base station 2, that is, the second target network-side device in the embodiment is the 5G base station 2. Specifically, after the UE accesses the 5G base station 2 at a certain moment, the UE transmits the RACH report to the 5G base station 2. After the 5G base station 2 parses the RACH report, the 5G base station 2 transmits a failure type of handover to a wrong cell or inter-system mobility failure during voice fallback parsed according to the RACH report, and/or the RACH report to 5G base station 1. The 5G base station 1 may perform network optimization based on information obtained by parsing the RACH report.

In the embodiment, in the above scenario (4), the 5G base station 1 releases the UE. After the UE fails to randomly access the 4G base station, the UE reestablishes a connection to a new 4G base station. When the UE knows inter-system voice fallback, the UE records relevant information about the access failure after failing to randomly access the 4G base station 1, and transmits it to the 5G base station 1 for optimization. In addition, in the embodiment, the information content recorded by the UE is enhanced, and the UE records information used for optimizing cell selection in the report, that is, the UE records the carrier information of the redirected cell and the priority of the redirected cell, so that the 5G base station 1 performs network optimization for voice callback.

In an embodiment of this application, the terminal requests access to the first target network-side device when performing inter-system voice fallback, and records the first relevant information when access to the first target network-side device fails; the terminal transmits the first relevant information to the second target network-side device that has been successfully accessed, so that the network-side device performs network optimization for voice fallback based on the first relevant information.

As shown in FIG. 2, an embodiment of this application further provides a network optimization method for voice fallback, which is applied to a source network-side device, and includes:
step 201: receiving, by the source network-side device, first relevant information of a terminal access failure transmitted by a target network-side device, where the first relevant information is relevant information recorded by a terminal when an access failure occurs in performing inter-system voice fallback; and
step 202: performing, by the source network-side device, network optimization on a voice fallback related parameter according to the first relevant information.

In the embodiment, the source network-side device may be a source base station accessed by the terminal before performing inter-system voice fallback, and the target network-side device may be a target base station that the terminal needs to handover from the source network-side device when performing inter-system voice fallback. Optionally, the target network-side device may include a first target network-side device and/or a second target network-side device, and the first target network-side device is a target network-side device that the terminal requests access due to inter-system voice fallback. The terminal fails to access the first target network-side device, and the first relevant information may be relevant information recorded when the terminal fails to access the first target network-side device; the second target network-side device is a target network-side device to which the terminal re-accesses after the failure occurs to access to the first target network-side device.

In case of performing inter-system voice fallback, when access of the target network-side device as requested fails, the terminal records the relevant information of the access failure (that is, the first relevant information), and when another target network-side device is successfully accessed, the successfully accessed target network-side device reports the relevant information of the access failure to the source network-side device, and the source network-side device performs network optimization for voice fallback based on the relevant information of the access failure recorded by the terminal.

As an optional embodiment, the receiving, by the source network-side device, the first relevant information of the terminal access failure transmitted by the target network-side device includes: receiving, by the source network-side device, second relevant information transmitted by a second target network-side device, where the second relevant information includes the first relevant information; and/or receiving third relevant information transmitted by a first target network-side device, where the third relevant information includes the first relevant information, where the first target network-side device is a network device that the terminal requests access due to inter-system voice fallback, and the second target network-side device is a network device that the terminal successfully accesses after the failure occurs to access to the first target network-side device.

In the embodiment, the source network-side device may obtain the first relevant information in two manners.

Manner 1: when the terminal fails to access the first target network-side device, the terminal records the first relevant information of the access failure, and transmits the first relevant information to the second target network-side device that has been successfully accessed. After parsing the first relevant information, the second target network-side device may analyze and obtain that the failure type of the terminal access failure is handover to a wrong cell or inter-system mobility failure during voice fallback, and the second target network-side device may transmit the second relevant information to the source network-side device according to the first relevant information, where the second relevant information may include the first relevant information. Optionally, the second relevant information may also include indication information indicating that the failure type of the terminal access failure is handover to a wrong cell or inter-system mobility failure during voice fallback.

Manner 2: the second target network-side device transmits the first relevant information to the first target network-side device, and the first target network-side device transmits the third relevant information to the source network-side device according to the first relevant information.

Optionally, after the first target network-side device receives the first relevant information, the first target network-side device may parse the first relevant information to obtain the failure type of the terminal access failure is handover to a wrong cell or inter-system mobility failure during voice fallback, and may transmit the third relevant information to the source network-side device, where the third relevant information includes the first relevant information. Optionally, the third relevant information may also include indication information indicating that the failure type of the terminal access failure is handover to a wrong cell or inter-system mobility failure during voice fallback (Inter-system Mobility Failure during Voice Fallback).

As an optional embodiment, the second relevant information and/or the third relevant information also includes: indication information indicating that a failure type is inter-system mobility failure during voice fallback, and the performing, by the source network-side device, network optimization on the voice fallback related parameter according to the first relevant information includes: parsing the second relevant information and/or the third relevant information to determine that the failure type of the access failure is inter-system mobility failure during voice fallback; and performing network optimization on the voice fallback related parameter according to the first relevant information, where an optimized network parameter is used to prioritize handover the terminal to a network-side device other than the first target network-side device when performing inter-system voice fallback.

In the embodiment, both the second relevant information and/or the third relevant information may be used for network optimization. After receiving the second relevant information and/or the third relevant information, the source network-side device may determine that the access failure type when the terminal accesses the first target network-side device is handover to a wrong cell or inter-system mobility failure caused by voice fallback. In order to avoid the access failure again next time, the source network-side device may optimize the network parameter so that the terminal avoids preferential access to the first target network-side device in a next inter-system voice fallback. That is, the terminal preferentially accesses any other network device except the first target network-side device, such as the second target network-side device.

Optionally, when determining based on the second relevant information and/or the third relevant information that the failure type of the terminal access failure is handover to a wrong cell or inter-system mobility failure during voice fallback, the source network-side device may determine an access level of the first target network-side device. For example, during the next inter-system voice fallback, the terminal will not preferentially handover to the first target network-side device, but the terminal will preferentially handover to the second target network-side device, which can reduce the number of network handover failure experiences of the terminal.

In the embodiment, when the second target network-side device receives the first relevant information transmitted by the terminal and parses the first relevant information, it may be determined that the failure type of the terminal access failure is handover to a wrong cell or inter-system mobility failure during voice fallback. The second target network-side device may transmit the failure type and/or the first relevant information to the source network-side device, and the source network-side device does not need to parse it again, directly perform network optimization for voice fallback based on the second relevant information.

After receiving the first relevant information transmitted by the terminal, the second target network-side device may directly transmit the first relevant information to the first target network-side device; the first target network-side device parses the first relevant information to determine that the failure type of the terminal access failure is handover to a wrong cell or inter-system mobility failure caused by voice fallback. The first target network-side device may transmit the failure type and/or the first relevant information to the source network-side device, and the source network-side device may directly perform network optimization for voice fallback based on the third relevant information without parsing again.

As an optional embodiment, the source network-side device may obtain the first relevant information in the following three manners.

The receiving, by the source network-side device, the first relevant information of the terminal access failure transmitted by the target network-side device includes: receiving first relevant information transmitted by a second target network-side device. That is, if the terminal fails to access the first target network-side device when performing inter-system voice fallback, the terminal records the first relevant information of the access failure, and transmits the first relevant information to the second target network-side device that has been successfully accessed. The second target network-side device may not parse the first relevant information and may transmit the unparsed first relevant information to the source network-side device.

The method further includes: parsing, by the source network-side device, the first relevant information to determine that the failure type of the access failure is handover to a wrong cell or inter-system mobility failure during voice fallback; and performing network optimization on the voice fallback related parameter according to the first relevant information, where an optimized network parameter is used to prioritize handover the terminal to a network-side device other than the first target network-side device when performing inter-system voice fallback.

Optionally, after the second target network-side device receives the first relevant information transmitted by the terminal, the unparsed first relevant information may be directly carried in the second relevant information (or, the second relevant information is the same as the first relevant information), which is transmitted to the source network-side device. The source network-side device parses the second relevant information to determine that the failure type of the terminal access failure is handover to a wrong cell or inter-system mobility failure during voice fallback, and the source network-side device may perform network optimization during the next inter-system voice fallback based on the parsed content. For example, after collecting statistics for many times, the source network-side device determines that a UE does not preferentially handover to the first target network-side device when inter-system call fallback needs to be performed, but the UE preferentially handovers to the second target network-side device, which can decrease the handover failures/RLFs experienced by the terminal on the first target network-side device.

Optionally, the first relevant information includes at least one of the following:
1) an identification of the first target network-side device, i.e., a cell ID of a failed cell (failed cell ID);
2) an identification of the source network-side device (pervious cell ID) i.e., an identification of the source network-side device that is accessed by the terminal before performing inter-system voice fallback;
3) an identification of the second target network-side device, i.e., a reconnect/reestablishment cell ID;
4) carrier information of the first target network-side device; where the carrier information may be used for network optimization by the source network-side device, for example, determining whether the first target network-side device is suitable for a terminal to access based on the carrier information;
5) a priority of the first target network-side device; where the priority may be used for network optimization by the source network-side device, for example, determining whether to allow the terminal to access the first target network-side device according to the priority;
6) voice fallback (voice fallback) indication; where the voice fallback indication may be used to trigger network optimization, for example, when detecting the voice fallback indication, the source network-side device performs network optimization according to the first relevant information.

Optionally, the coding format of the first relevant information includes one of the following.
1) A network coding format corresponding to a mobile communication system to which the source network-side device belongs. For example, the first relevant information as recorded is an RLF report, the source network-side device is a 5G base station, and the RLF report may be in accordance with a 5G coding format.
2) A network coding format corresponding to a mobile communication system to which the first target network-side device belongs. For example, the first relevant information as recorded is an RLF report, the first target network-side device is a 4G base station, and the RLF report may be coded according to a 4G coding format.
3) A network coding format corresponding to a mobile communication system to which the second target network-side device belongs. For example, the first relevant information as recorded is an RLF report, the first target network-side device is a 3G base station, and the RLF report may be coded according to a 3G coding format.

In an embodiment of this application, the source network-side device receives the first relevant information for network optimization. The first relevant information is relevant information recorded when the terminal fails to access the first target network-side device during inter-system voice fallback. The source network-side device performs network optimization for inter-system voice fallback based on the first relevant information of the access failure, so as to reduce the number of the experiences of accessing the wrong cell by the terminal.

As shown in FIG. 3, an embodiment of this application further provides an information processing method for voice fallback, which is applied to a second target network-side device, and includes the following steps.

Step 301: receiving, by the second target network-side device, first relevant information transmitted by a terminal, where the first relevant information is relevant information recorded by a terminal when an access failure occurs in performing inter-system voice fallback.

In the embodiment, in case of inter-system voice fallback, when failing to access a first target network-side device, the terminal records the first relevant information of the access failure; when the terminal successfully accesses the second target network-side device, the terminal transmits the first relevant information to the second target network-side device.

Step 302: transmitting, by the second target network-side device according to the first relevant information, second relevant information of the access failure of the terminal to a source network-side device that is accessed by the terminal before performing inter-system voice fallback, where the second relevant information includes the first relevant information; and/or, transmitting the first relevant information to a first target network-side device, where the first target network-side device is a network device that the terminal requests access due to inter-system voice fallback. The first relevant information and/or the second relevant information may be used for network optimization for voice rollback.

Optionally, the second target network-side device transmits the first relevant information of the terminal access failure to the source network-side device that is accessed by the terminal before performing inter-system voice fallback.

In the embodiment, the first target network-side device is a network device that the terminal requests access due to inter-system voice fallback, and the second target network-side device is a network-side device that is successfully accessed by the terminal after the failure occurs to access to the first target network-side device. During inter-system voice fallback, when failing to access the first target network-side device, the terminal records the first relevant information of the access failure; when the terminal successfully accesses the second target network-side device, the terminal transmits the first relevant information to the second target network-side device.

The second target network-side device may directly transmit the first relevant information to the source network-side device that is accessed by the terminal before performing voice fallback, or may parse the first relevant information and may transmit the obtained information content (that is, the second relevant information) from parsing to the source network-side device; or the second target network-side device transmits the first relevant information to the first target network-side device, so that the first target network-side device parses the first relevant information and transmits the parsed content to the source network-side device. The source network-side device performs network optimization for voice fallback based on relevant information about the access failure.

The second target network-side device and the first target network-side device may be in the same communication system. For example, the second target network-side device and the first target network-side device are both in a 4G communication system. The second target network-side device and the first target network-side device may also be in different communication systems. For example, the first target network-side device is in a 4G communication system, and the second target network-side device is in a 3G communication system.

In an embodiment of this application, the second target network-side device receives the first relevant information of the access failure recorded when the terminal performs inter-system voice fallback and an access failure occurs, and transmits the first relevant information to the first target network-side device, and/or, transmits, according to the first relevant information, second relevant information of the access failure to the source network-side device that is accessed by the terminal before performing inter-system voice fallback, so that the source network-side device optimizes a network for voice fallback according to the relevant information of the access failure, so as to prevent the terminal from accessing an incorrect cell during the next voice fallback.

Optionally, the first relevant information includes at least one of the following:
1) an identification of the first target network-side device; that is, the cell ID of the failed cell (failed cell ID);
2) an identification of the source network-side device (pervious cell ID) accessed by the terminal before performing inter-system voice fallback;
3) an identification of the second target network-side device; that is, reconnect/reestablishment cell ID;
4) a target report recording the first relevant information, where the target report is: an RLF report, a random access (RACH) report or a newly defined report;
5) carrier information of the first target network-side device; where the carrier information may be used for network optimization by the source network-side device, for example, determining whether the first target network-side device is suitable for a terminal to access based on the carrier information;
6) a priority of the first target network-side device; where the priority may be used for network optimization by the source network-side device, for example, determining whether to allow the terminal to access the first target network-side device according to the priority;
7) voice fallback (voice fallback) indication; where the voice fallback indication may be used to trigger network optimization, for example, when detecting the voice fallback indication, the source network-side device performs network optimization according to the first relevant information.

Optionally, the coding format of the first relevant information includes one of the following.
1) A network coding format corresponding to a mobile communication system to which the source network-side device belongs. For example, the first relevant information as recorded is an RLF report, the source network-side device is a 5G base station, and the RLF report may be in accordance with a 5G coding format.
2) A network coding format corresponding to a mobile communication system to which the first target network-side device belongs. For example, the first relevant information as recorded is an RLF report, the first target network-side device is a 4G base station, and the RLF report may be coded according to a 4G coding format.
3) A network coding format corresponding to a mobile communication system to which the second target network-side device belongs. For example, the first relevant information as recorded is an RLF report, the first target network-side device is a 3G base station, and the RLF report may be coded according to a 3G coding format.

Optionally, the failure of the terminal to access the first target network-side device may include one of the following:
the terminal successfully handovers from a source network-side device to the first target network-side device, and a radio link failure (RLF) occurs within a first duration; the terminal reestablishes a connection to the second target network-side device;
after the terminal enters an RRC_idle state by releasing a radio resource control (RRC) connection with a source network-side device, the terminal successfully redirects to the first target network-side device, and an RLF occurs within a first duration; the terminal reestablishes a connection to the second target network-side device;
a handover failure occurs when the terminal handovers from a source network-side device to the first target network-side device;
after the terminal enters an RRC_idle state by releasing an RRC connection with a source network-side device, a failure occurs during a process of initiating random access to the first target network-side device, the terminal reestablishes a connection to the second target network-side device;
where the source network-side device is a network-side device that is accessed by the terminal before performing inter-system voice fallback.

After the second target network-side device receives the first relevant information, when transmitting the second relevant information to the source network-side device according to the first relevant information, the second target network-side device may parse the first relevant information and may transmit the obtained content from parsing to the source network-side device, or may directly transmit the unparsed first relevant information to the source network-side device, which will be explained in detail below through embodiments.

As an optional embodiment, the transmitting, according to the first relevant information, the second relevant information of the access failure of the terminal to the source network-side device that is accessed by the terminal before performing inter-system voice fallback includes: parsing the first relevant information to determine that a failure type of the access failure of the terminal is handover to a wrong cell or inter-system mobility failure caused by voice fallback; and transmitting the second relevant information to the source network-side device, where the second relevant information includes indication information indicating that the failure type is handover to the wrong cell or inter-system mobility failure caused by voice fallback.

In the embodiment, by parsing the first relevant information, the second target network-side device may determine that the failure type of the terminal access failure is handover to a wrong cell or inter-system mobility failure during voice fallback. The second target network-side device may transmit the first relevant information and the failure type to the source network-side device, so that the source network-side device may perform network optimization for voice fallback.

For example, the source network-side device is a 5G base station 1, the second target network-side device is a 5G base station 2, and the first target network-side device is a 4G base station 1. After a UE accesses the 5G base station 2 at a certain moment, the UE transmits an RLF report to the 5G base station 2. After parsing the RLF report, the 5G base station 2 transmits a failure type of handover to a wrong cell or inter-system mobility failure during voice fallback parsed according to the RLF report, and/or the RLF report to the 5G base station 1. The 5G base station 1 may perform network optimization based on the information obtained by parsing the RLF report, which can prevent the terminal from accessing an incorrect cell during the next voice fallback.

As an optional embodiment, the transmitting, according to the first relevant information, the second relevant information of the access failure of the terminal to the source network-side device that is accessed by the terminal before performing inter-system voice fallback includes: transmitting the second relevant information through a first interface to the source network-side device that is accessed by the terminal before performing inter-system voice fallback.

In the embodiment, the second target network-side device does not parse the first relevant information after receiving it, but directly transmits the first relevant information to the source network-side device. The source network-side device parses the first relevant information to determine that the failure type of the terminal access failure is handover to a wrong cell or inter-system mobility failure during voice fallback. The source network-side device performs network optimization for voice fallback based on the information content obtained through the parsing, which can prevent the terminal from accessing an incorrect cell during the next voice fallback.

For example, the source network-side device is a 5G base station 1, the second target network-side device is a 4G base station 2, and the first target network-side device is a 4G base station 1. The UE reports an RLF report to the 4G base station 2 according to the instruction of the 4G base station 2, which carries a source cell ID of the 5G base station. After receiving the RLF report, the 4G base station 2 transmits the unparsed RLF report to the 5G base station 1 through the X2 interface. The 5G base station 1 parses the RLF report to obtain relevant information about the access failure recorded by the UE, and may parse it to obtain the failure type of the access failure, thereby optimizing the network for voice fallback.

After receiving the first relevant information, the second target network-side device may also transmit the relevant information of the access failure to the source network-side device through the first target network-side device. Optionally, the transmitting the first relevant information to the first target network-side device includes: transmitting a failure indication to the first target network-side device, where the failure indication includes the first relevant information.

In the embodiment, the second target network-side device transmits the first relevant information to the first target network-side device through a failure indication. The first target network-side device parses the first relevant information to determine that the failure type of the terminal access failure is handover to a wrong cell or inter-system mobility failure during voice fallback, and the first target network-side device transmits the failure type and/or the first relevant information to the source network-side device, to enable the source network-side device to perform network optimization for voice fallback.

For example, the source network-side device is a 5G base station 1, the second target network-side device is a 4G base station 2, and the first target network-side device is a 4G base station 1. The UE reports an RLF report to the 4G base station 2 according to the instruction of the 4G base station 2. After receiving the RLF report, the 4G base station 2 transmits a failure indication (failure indication) to the 4G base station 1, where the failure indication includes the RLF report. The 4G base station 1 parses the RLF report to find that the failure type of the terminal access failure is handover to a wrong cell or inter-system mobility failure during voice fallback. The 4G base station 1 transmits Inter-system HO Report or a newly introduced signaling. The Inter-system HO Report or the signaling includes the failure type and/or the first relevant information.

In an embodiment of this application, the second target network-side device receives the first relevant information of the access failure recorded when the terminal fails to access the first target network side in performing inter-system voice fallback, and transmits the first relevant information to the first target network-side device, and/or transmits, according to the first relevant information, the second relevant information of the access failure to the source network-side device that is accessed by the terminal before performing inter-system voice fallback, so that the source network-side device performs network optimization for voice fallback based on relevant information about the access failure.

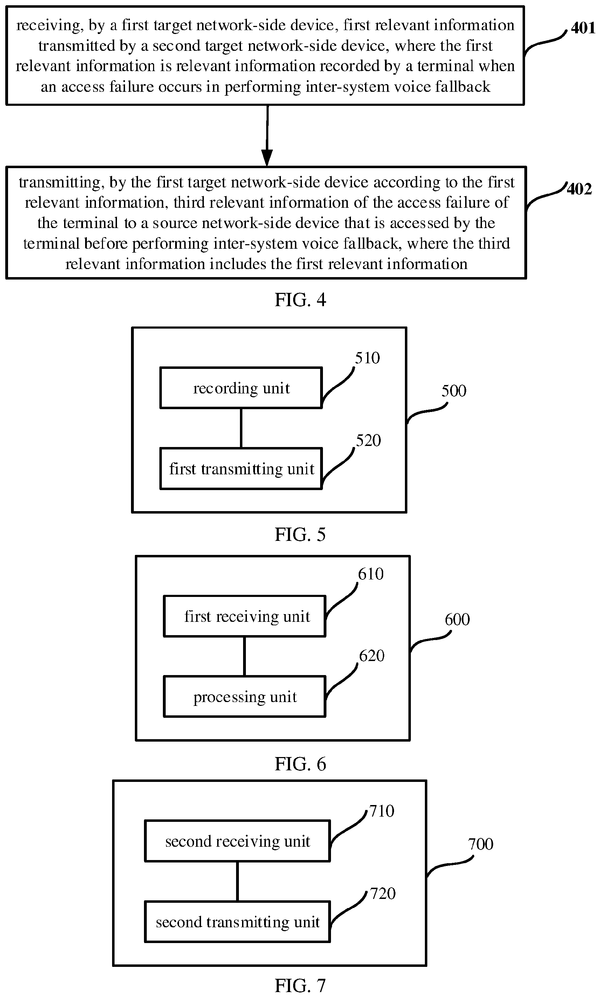

As shown in FIG. 4, an embodiment of this application further provides an information processing method for voice fallback, which is applied to the first target network-side device, and includes:
step 401: receiving, by a first target network-side device, first relevant information transmitted by a second target network-side device, where the first relevant information is relevant information recorded by a terminal when an access failure occurs in performing inter-system voice fallback; and
step 402: transmitting, by the first target network-side device according to the first relevant information, third relevant information of the access failure of the terminal to a source network-side device that is accessed by the terminal before performing inter-system voice fallback, where the third relevant information includes the first relevant information, where the second target network-side device is a network device that the terminal successfully accesses after the failure occurs to access to the first target network-side device.

The first relevant information and/or the third relevant information may be used for network optimization for voice rollback.

In the embodiment, the first target network-side device is a target network-side device that the terminal fails to access when performing inter-system voice fallback. Before inter-system voice fallback is performed, the source network-side device that is accessed by the terminal may be a 5G base station, and the first target network-side device may be a 4G base station. When inter-system voice fallback needs to be performed, the terminal fails to access the 4G base station from the 5G base station, the first relevant information of the access failure is recorded.

The first relevant information received by the first target network-side device is transmitted by the second target network-side device that the terminal successfully accesses. For example, after the terminal fails to access the first target network-side device and reestablishes a connection to the second target network-side device, the terminal may transmit the first relevant information to the second target network-side device, and the second target network-side device transmits the first relevant information to the first target network-side device.

After obtaining the first relevant information, the first target network-side device may obtain relevant information content of the terminal access failure by parsing the first relevant information. For example, the failure type of the access failure is a message about access error. In this case, the third relevant information related to the access failure is transmitted to the source network-side device, so that the network-side device can perform network optimization for voice fallback.

In an embodiment of this application, the first target network-side device receives the first relevant information of the access failure recorded by the terminal when failing to access the first target network side in performing inter-system voice fallback, and transmits, according to the first relevant information, the third relevant information of the access failure to the source network-side device that is accessed by the terminal before performing inter-system voice fallback, where the third relevant information includes the first relevant information, so that the source network-side device can perform network optimization of voice fallback based on the relevant information of the access failure, thereby preventing the terminal from accessing an incorrect cell during the next voice fallback.

Optionally, the first relevant information includes at least one of the following:
1) an identification of the first target network-side device, i.e., a cell ID of a failed cell (failed cell ID);
2) an identification of the source network-side device (pervious cell ID) accessed by the terminal before performing inter-system voice fallback;
3) an identification of the second target network-side device, i.e., a reconnect/reestablishment cell ID;
4) the terminal may record the first relevant information in a target report, where the target report is an RLF report, a random access (RACH) report or a newly defined report;
5) carrier information of the first target network-side device; where the carrier information may be used for network optimization by the source network-side device, for example, determining whether the first target network-side device is suitable for a terminal to access based on the carrier information;
6) a priority of the first target network-side device; where the priority may be used for network optimization by the source network-side device, for example, determining whether to allow the terminal to access the first target network-side device according to the priority;
7) voice fallback (voice fallback) indication; where the voice fallback indication may be used to trigger network optimization, for example, when detecting the voice fallback indication, the source network-side device performs network optimization according to the first relevant information.

Optionally, the coding format of the first relevant information includes one of the following:
1) A network coding format corresponding to a mobile communication system to which the source network-side device belongs. For example, the first relevant information as recorded is an RLF report, the source network-side device is a 5G base station, and the RLF report may be in accordance with a 5G coding format.
2) A network coding format corresponding to a mobile communication system to which the first target network-side device belongs. For example, the first relevant information as recorded is an RLF report, the first target network-side device is a 4G base station, and the RLF report may be coded according to a 4G coding format.
3) A network coding format corresponding to a mobile communication system to which the second target network-side device belongs. For example, the first relevant information as recorded is an RLF report, the first target network-side device is a 3G base station, and the RLF report may be coded according to a 3G coding format.

As an optional embodiment, the transmitting, according to the first relevant information, the third relevant information of the access failure of the terminal to the source network-side device that is accessed by the terminal before performing inter-system voice fallback includes: parsing the first relevant information to determine that a failure type of the access failure of the terminal is handover to a wrong cell or inter-system mobility failure caused by voice fallback; and transmitting the third relevant information to the source network-side device, where the third relevant information includes indication information indicating that the failure type is handover to the wrong cell or inter-system mobility failure caused by voice fallback.

In the embodiment, by parsing the first relevant information, the first target network-side device may determine that the failure type of the terminal access failure is handover to a wrong cell or inter-system mobility failure during voice fallback. The first target network-side device may transmit the first relevant information and the failure type to the source network-side device, so that the source network-side device can perform network optimization for voice fallback.

Optionally, the receiving the first relevant information transmitted by the second target network-side device includes: receiving a failure indication transmitted by the second target network-side device, where the failure indication includes the first relevant information.

In the embodiment, the terminal transmits the recorded the first relevant information of the access failure to the second target network-side device, and the second target network-side device transmits the first relevant information to the first target network-side device through the failure indication. The first target network-side device parses the first relevant information to determine that the failure type of the terminal access failure is handover to a wrong cell or inter-system mobility failure during voice fallback, and the first target network-side device transmits the failure type and/or the first relevant information to the source network-side device, to enable the source network-side device to perform network optimization for voice fallback.

Optionally, the case that the terminal accesses the first target network-side device and the failure occurs may include one of the following:
the terminal successfully handovers from a source network-side device to the first target network-side device, and a radio link failure (RLF) occurs within a first duration;
after the terminal enters an RRC_idle state by releasing a radio resource control (RRC) connection with a source network-side device, the terminal successfully redirects to the first target network-side device, and an RLF occurs within a first duration;
a handover failure occurs when the terminal handovers from a source network-side device to the first target network-side device;
after the terminal enters an RRC_idle state by releasing an RRC connection with a source network-side device, a failure occurs during a process of initiating random access to the first target network-side device,
where the source network-side device is a network-side device that is accessed by the terminal before performing inter-system voice fallback.

The terminal successfully accesses the second target network-side device after the failure occurs to access to the first target network-side device, and reports the recorded first relevant information of the access failure to the second target network-side device. The second target network-side device transmits the first relevant information to the first target network-side device.

In the embodiment of this application, the first target network-side device receives the first relevant information of the access failure recorded by the terminal when failing to access the first target network side in performing inter-system voice fallback, and transmits, according to the first relevant information, the third relevant information of the access failure to the source network-side device that is accessed by the terminal before performing inter-system voice fallback, where the third relevant information includes the first relevant information. In this way, the source network-side device can perform network optimization of voice fallback according to the relevant information of the access failure, so as to prevent the terminal from accessing an incorrect cell during the next voice fallback.

The methods of this application have been introduced in the above embodiments. The following embodiment will further describe the corresponding device in conjunction with the accompanying drawings.

Specifically, as shown in FIG. 5, an embodiment of this application provides an information processing apparatus 500 for voice fallback, which is applied to a terminal and includes:
a recording unit 510, configured to record first relevant information of a failure in a case that a terminal accesses a first target network-side device and the failure occurs, where the first target network-side device is a network device that the terminal requests access due to inter-system voice fallback; and
a first transmitting unit 520, configured to transmit the first relevant information to a second target network-side device, where the second target network-side device is a network device that the terminal successfully accesses after the failure occurs to access to the first target network-side device.

Optionally, the case that the terminal accesses the first target network-side device and the failure occurs includes one of the following:
the terminal successfully handovers from a source network-side device to the first target network-side device, and a radio link failure (RLF) occurs within a first duration;
after the terminal enters an RRC_idle state by releasing a radio resource control (RRC) connection with a source network-side device, the terminal successfully redirects to the first target network-side device, and an RLF occurs within a first duration;
a handover failure occurs when the terminal handovers from a source network-side device to the first target network-side device;
after the terminal enters an RRC_idle state by releasing an RRC connection with a source network-side device, a failure occurs during a process of initiating random access to the first target network-side device,
where the source network-side device is a network-side device that is accessed by the terminal before performing inter-system voice fallback.

Optionally, the first relevant information includes at least one of the following:
an identification of the first target network-side device;
an identification of a source network-side device that is accessed by the terminal before performing inter-system voice fallback;
an identification of the second target network-side device;
carrier information of the first target network-side device;
a priority of the first target network-side device; or
voice fallback indication.

Optionally, the recording unit is specifically configured to record the first relevant information of the failure according to a defined coding format, where the defined coding format includes one of the following:
a network coding format corresponding to a mobile communication system to which a source network-side device that is accessed by the terminal before performing inter-system voice fallback belongs;
a network coding format corresponding to a mobile communication system to which the first target network-side device belongs;
a network coding format corresponding to a mobile communication system to which the second target network-side device belongs.

Optionally, the apparatus further includes:
a fourth receiving unit, configured to a handover command or an RRC release message that carries voice fallback indication; and
an execution unit, configured to access the first target network-side device from a source network-side device that is currently accessed, according to the handover command or the RRC release message.

It should be noted that the above apparatus provided in the embodiment of this application can implement all method steps implemented in the above method embodiments, and can achieve the same technical effects. Therefore, the description and the beneficial effect of this embedment that are the same as the method embodiments will not be introduced here in detail.

Specifically, as shown in FIG. 6, an embodiment of this application provides a network optimization apparatus 600 for voice fallback, which is applied to source network-side device and includes:
a first receiving unit 610, configured to receive first relevant information of a terminal access failure transmitted by a target network-side device, where the first relevant information is relevant information recorded by a terminal when an access failure occurs in performing inter-system voice fallback; and
a processing unit 620, configured to perform network optimization on a voice fallback related parameter according to the first relevant information.

Optionally, the first receiving unit is specifically configured to: receive second relevant information transmitted by a second target network-side device, where the second relevant information includes the first relevant information; and/or receiving third relevant information transmitted by a first target network-side device, where the third relevant information includes the first relevant information, where the first target network-side device is a network device that the terminal requests access due to inter-system voice fallback, and the second target network-side device is a network device that the terminal successfully accesses after the failure occurs to access to the first target network-side device.

Optionally, the second relevant information and/or the third relevant information further includes: indication information indicating that a failure type is handover to a wrong cell or inter-system mobility failure caused by voice fallback, and the processing unit is specifically configured to:
parse the second relevant information and/or the third relevant information to determine that the failure type of the access failure is handover to a wrong cell or inter-system mobility failure caused by voice fallback; and
perform network optimization on the voice fallback related parameter according to the first relevant information, where an optimized network parameter is used to prioritize handover the terminal to a network-side device other than the first target network-side device when performing inter-system voice fallback.

Optionally, the first relevant information includes at least one of the following:
an identification of the first target network-side device;
an identification of the source network-side device;
an identification of the second target network-side device;
carrier information of the first target network-side device;
a priority of the first target network-side device; or
voice fallback indication.

It should be noted that the above apparatus provided in the embodiment of this application can implement all method steps implemented in the above method embodiments applied to the source network-side device, and can achieve the same technical effects. Therefore, the description and the beneficial effect of this embedment that are the same as the method embodiments will not be introduced here in detail.

Specifically, as shown in FIG. 7, an embodiment of this application provides an information processing apparatus 700 for voice fallback, which is applied to a second target network-side device, and includes:
a second receiving unit 710, configured to receive first relevant information transmitted by a terminal, where the first relevant information is relevant information recorded by a terminal when an access failure occurs in performing inter-system voice fallback; and
a second transmitting unit 720, configured to transmit, according to the first relevant information, second relevant information of the access failure of the terminal to a source network-side device that is accessed by the terminal before performing inter-system voice fallback, where the second relevant information includes the first relevant information; and/or, transmitting the first relevant information to a first target network-side device,
where the first target network-side device is a network device that the terminal requests access due to inter-system voice fallback.

Optionally, the second transmitting unit is specifically configured to: parse the first relevant information to determine that a failure type of the access failure of handover to a wrong cell or inter-system mobility failure caused by voice fallback; and transmit the second relevant information to the source network-side device, where the second relevant information includes indication information indicating that the failure type is handover to a wrong cell or inter-system mobility failure caused by voice fallback.

Optionally, the second transmitting unit is specifically configured to: transmit the second relevant information through a first interface to the source network-side device that is accessed by the terminal before performing inter-system voice fallback.

Optionally, the second transmitting unit is specifically configured to: transmit a failure indication to the first target network-side device, where the failure indication includes the first relevant information.

Optionally, the first relevant information includes at least one of the following:
an identification of the first target network-side device;
an identification of a source network-side device that is accessed by the terminal before performing inter-system voice fallback;
an identification of the second target network-side device;
carrier information of the first target network-side device;
a priority of the first target network-side device; or
voice fallback indication.

Optionally, the coding format of the first relevant information includes one of the following:
a network coding format corresponding to a mobile communication system to which a source network-side device belongs;
a network coding format corresponding to a mobile communication system to which the first target network-side device belongs;
a network coding format corresponding to a mobile communication system to which the second target network-side device belongs.

It should be noted that the above apparatus provided in the embodiment of this application can implement all method steps implemented in the above method embodiments applied to the second target network-side device, and can achieve the same technical effects. Therefore, the description and the beneficial effect of this embedment that are the same as the method embodiments will not be introduced here in detail.

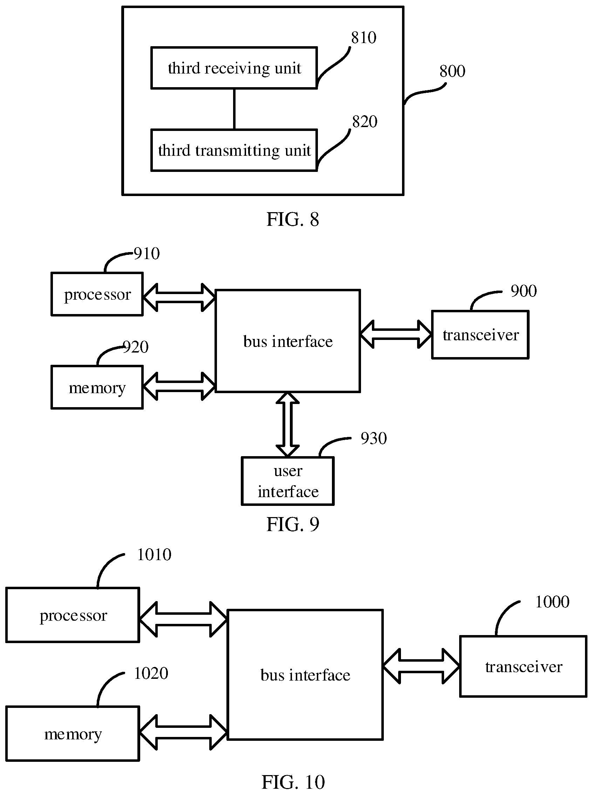

Specifically, as shown in FIG. 8, an embodiment of this application provides an information processing apparatus 800 for voice fallback, which is applied to the first target network-side device and includes:
a third receiving unit 810, configured to receive first relevant information transmitted by a second target network-side device, where the first relevant information is relevant information recorded by a terminal when an access failure occurs in performing inter-system voice fallback; and
a third transmitting unit 820, configured to transmit, according to the first relevant information, third relevant information of the access failure of the terminal to a source network-side device that is accessed by the terminal before performing inter-system voice fallback, where the third relevant information includes the first relevant information,
where the second target network-side device is a network device that the terminal successfully accesses after the failure occurs to access to the first target network-side device.

Optionally, the third transmitting unit is specifically configured to:
parse the first relevant information to determine that a failure type of the access failure of the terminal is handover to a wrong cell or inter-system mobility failure caused by voice fallback; and
transmit the third relevant information to the source network-side device, where the third relevant information includes indication information indicating that the failure type is handover to the wrong cell or inter-system mobility failure caused by voice fallback.

Optionally, the second receiving unit is specifically configured to: receive a failure indication transmitted by the second target network-side device, where the failure indication includes the first relevant information.

Optionally, the first relevant information includes at least one of the following:
an identification of the first target network-side device;
an identification of a source network-side device that is accessed by the terminal before performing inter-system voice fallback;
an identification of the second target network-side device;
carrier information of the first target network-side device;
a priority of the first target network-side device; or
voice fallback indication.

Optionally, the coding format of the first relevant information includes one of the following:
a network coding format corresponding to a mobile communication system to which the source network-side device belongs;
a network coding format corresponding to a mobile communication system to which the first target network-side device belongs;
a network coding format corresponding to a mobile communication system to which the second target network-side device belongs.

It should be noted that the above apparatus provided in the embodiment of this application can implement all method steps implemented in the above method embodiments applied to the first target network-side device, and can achieve the same technical effects. Therefore, the description and the beneficial effect of this embedment that are the same as the method embodiments will not be introduced here in detail.

It should be noted that the division of units in the embodiments of this application is illustrative, and is only a logical function division, and there may be another division manner in actual implementation. In addition, the functional units in various embodiments of this application may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of this application, or all or a part of the technical solution may be implemented in a form of a software product. The computer software product is stored in a storage medium, and includes several instructions to enable a computer device (which may be a personal computer, a server, or a network device, etc.) or a processor (processor) to execute part or all of the steps of the methods described in the various embodiments of this application. The aforementioned storage media include: universal serial bus (USB) flash drive, removable hard disk, read-only memory (Read-Only Memory, ROM), random access memory (Random Access Memory, RAM), magnetic disk, optical disc or other media that can store program codes.

As shown in FIG. 9, an embodiment of this application further provides a terminal, including: a memory 920, a transceiver 900, and a processor 910. The memory 920 is configured to store a computer program; the transceiver 900 is configured to transmit and receive data under the control of the processor 910; the processor 910 is configured to read the computer program in the memory to perform the following operations: failing, by a terminal, to access a first target network-side device, and recording first relevant information of an access failure, where the first target network-side device is a network device that the terminal requests access due to inter-system voice fallback.

The transceiver is configured to: transmit the first relevant information to a second target network-side device, where the second target network-side device is a network device that the terminal successfully accesses after the failure occurs to access to the first target network-side device.

Optionally, the case that the terminal accesses the first target network-side device and the failure occurs includes one of the following:
the terminal successfully handovers from a source network-side device to the first target network-side device, and a radio link failure (RLF) occurs within a first duration;
after the terminal enters an RRC_idle state by releasing a radio resource control (RRC) connection with a source network-side device, the terminal successfully redirects to the first target network-side device, and an RLF occurs within a first duration;
a handover failure occurs when the terminal handovers from a source network-side device to the first target network-side device;
after the terminal enters an RRC_idle state by releasing an RRC connection with a source network-side device, a failure occurs during a process of initiating random access to the first target network-side device,
where the source network-side device is a network-side device that is accessed by the terminal before performing inter-system voice fallback.

Optionally, the first relevant information includes at least one of the following:
an identification of the first target network-side device;
an identification of a source network-side device that is accessed by the terminal before performing inter-system voice fallback;
an identification of the second target network-side device;
carrier information of the first target network-side device;
a priority of the first target network-side device; or
voice fallback indication.

Optionally, the processor is configured to read the computer program in the memory to: record the first relevant information of the failure according to a defined coding format, where the defined coding format includes one of the following:
a network coding format corresponding to a mobile communication system to which a source network-side device that is accessed by the terminal before performing inter-system voice fallback belongs;
a network coding format corresponding to a mobile communication system to which the first target network-side device belongs;
a network coding format corresponding to a mobile communication system to which the second target network-side device belongs.

Optionally, the transceiver is further configured to: receive a handover command or an RRC release message that carries voice fallback indication. The processor is configured to read the computer program in the memory to: access the first target network-side device from a source network-side device that is currently accessed, according to the handover command or the RRC release message.

In FIG. 9, the bus architecture may include any number of interconnected buses and bridges. Specifically, various circuits of one or more processors represented by the processor 910 and a memory represented by the memory 920 are linked together. The bus architecture may also link various other circuits such as peripheral devices, voltage regulators, power management circuits, etc., which are well-known in the art, and therefore, no further descriptions are provided herein. The bus interface provides an interface. The transceiver 900 may be a plurality of elements, that is, include a transmitter and a receiver, and provide a unit for communicating with various other devices on a transmission medium. For different user equipment, the user interface 930 may also be an interface capable of externally or internally connecting to required equipment. The connected equipment includes but not limited to a keypad, a display, a speaker, a microphone, a joystick, and the like. The processor 910 is responsible for managing the bus architecture and general processing, and the memory 920 may store data used by the processor 910 when performing operations.

The processor 910 may be a central processing unit (Central Process Unit, CPU), an application specific integrated circuit (Application Specific Integrated Circuit, ASIC), a field programmable gate array (Field-Programmable Gate Array, FPGA) or a complex programmable logic device (Complex Programmable Logic Device, CPLD), the processor may also adopt a multi-core architecture.

It should be noted here that the above-mentioned terminal provided by the embodiments of this application may implement all the method steps implemented by the above-mentioned method embodiments applied to the terminal, and can achieve the same technical effect. Therefore, the part and beneficial effects of this embedment that are the same as the method embodiments will not be described here in detail.

As shown in FIG. 10, an embodiment of this application further provides a network-side device. The network-side device is a source network-side device, including: a memory 1020, a transceiver 1000, and a processor 1010. The memory 1020 is configured to store a computer program; the processor 1010 is configured to read the computer program in the memory; the transceiver 1000 is configured to transmit and receive data under the control of the processor 1010 to perform the following operations: receiving first relevant information of a terminal access failure transmitted by a target network-side device, where the first relevant information is relevant information recorded by a terminal when an access failure occurs in performing inter-system voice fallback.

The processor is configured to read the computer program in the memory and perform the following operations: performing network optimization on a voice fallback related parameter according to the first relevant information.

Optionally, the transceiver is specifically configured to: receive second relevant information transmitted by a second target network-side device, where the second relevant information includes the first relevant information; and/or receiving third relevant information transmitted by a first target network-side device, where the third relevant information includes the first relevant information, where the first target network-side device is a network device that the terminal requests access due to inter-system voice fallback, and the second target network-side device is a network device that the terminal successfully accesses after the failure occurs to access to the first target network-side device.

Optionally, the second relevant information and/or the third relevant information further includes: indication information indicating that a failure type is handover to a wrong cell or inter-system mobility failure caused by voice fallback, and the processor is configured to read the computer program in the memory and perform the following operations:
parsing the second relevant information and/or the third relevant information to determine that the failure type of the access failure is handover to a wrong cell or inter-system mobility failure caused by voice fallback; and
performing network optimization on the voice fallback related parameter according to the first relevant information, where an optimized network parameter is used to prioritize handover the terminal to a network-side device other than the first target network-side device when performing inter-system voice fallback.

Optionally, the first relevant information includes at least one of the following:
an identification of the first target network-side device;
an identification of the source network-side device;
an identification of the second target network-side device;
carrier information of the first target network-side device;
a priority of the first target network-side device; or
voice fallback indication.

In FIG. 10, the bus architecture may include any number of interconnected buses and bridges. Specifically one or more processors represented by processor 1010 and various circuits of the memory represented by memory 1020 are linked together. The bus architecture may also link together various other circuits such as peripherals, voltage regulators, and power management circuits, which are all well known in the art, and therefore, no further descriptions are provided herein. The bus interface provides an interface. The transceiver 1000 may be a plurality of elements, including a transmitter and a transceiver, and provide a unit for communicating with various other devices on a transmission medium. The processor 1010 is responsible for managing the bus architecture and general processing, and the memory 1020 may store data used by the processor 1010 when performing operations.

The processor 1010 may be a CPU, ASIC, FPGA or CPLD, and the processor may also adopt a multi-core architecture.

It should be noted here that the above-mentioned network-side device provided by the embodiment of this application can implement all the method steps implemented by the above-mentioned method embodiment applied to the source network-side device, and can achieve the same technical effect. Therefore, the description and the beneficial effect of this embedment that are the same as the method embodiments will not be introduced here in detail.

An embodiment of this application further provides a network-side device, which is a second target network-side device, and includes: a memory, a transceiver and a processor. The memory is configured to store a computer program; the processor is configured to read the computer program from the memory; the transceiver is configured to transmit and receive data under the control of the processor to perform the following operations:
receiving first relevant information transmitted by a terminal, where the first relevant information is relevant information recorded by a terminal when an access failure occurs in performing inter-system voice fallback; and
transmitting, according to the first relevant information, second relevant information of the access failure of the terminal to a source network-side device that is accessed by the terminal before performing inter-system voice fallback, where the second relevant information includes the first relevant information; and/or, transmitting the first relevant information to a first target network-side device,
where the first target network-side device is a network device that the terminal requests access due to inter-system voice fallback.

Optionally, the processor is configured to read the computer program in the memory to: parse the first relevant information to determine that a failure type of the access failure of the terminal is handover to a wrong cell or inter-system mobility failure caused by voice fallback. The transceiver is further configured to: transmit the second relevant information to the source network-side device, where the second relevant information includes indication information indicating that the failure type is handover to a wrong cell or inter-system mobility failure caused by voice fallback.

Optionally, the transceiver is further configured to: transmit the second relevant information through a first interface to the source network-side device that is accessed by the terminal before performing inter-system voice fallback.

Optionally, the transceiver is also configured to: transmit a failure indication to the first target network-side device, where the failure indication includes the first relevant information.

In the embodiment, the bus architecture may include any number of interconnected buses and bridges. Specifically one or more processors represented by the processor and various circuits of the memory represented by the memory are linked together. The bus architecture may also link various other circuits such as peripheral devices, voltage regulators, power management circuits, etc., which are well-known in the art, and therefore, no further descriptions are provided herein. The transceiver may be a plurality of elements, including a transmitter and a transceiver, providing a unit for communicating with various other devices over a transmission medium. The processor is responsible for managing the bus architecture and general processing, and the memory stores data used by the processor when performing operations.

The processor may be a CPU, ASIC, FPGA or CPLD, and the processor may also adopt a multi-core architecture.

It should be noted here that the above-mentioned terminal provided by the embodiments of this application may implement all the method steps implemented by the above-mentioned method embodiments applied to the second target network-side device, and can achieve the same technical effect. Therefore, the part and beneficial effects of this embedment that are the same as the method embodiments will not be described here in detail.

An embodiment of this application further provides a network-side device, which is a first target network-side device, and includes: a memory, a transceiver, and a processor. The memory is used to store a computer program; the processor is configured to read the computer program in the memory; the transceiver is configured to transmit and receive data under the control of the processor to perform the following operations:
receiving first relevant information transmitted by a second target network-side device, where the first relevant information is relevant information recorded by a terminal when an access failure occurs in performing inter-system voice fallback; and
transmitting, according to the first relevant information, third relevant information of the access failure of the terminal to a source network-side device that is accessed by the terminal before performing inter-system voice fallback, where the third relevant information includes the first relevant information,
where the second target network-side device is a network device that the terminal successfully accesses after the failure occurs to access to the first target network-side device.

Optionally, the processor is configured to read the computer program in the memory to perform the following operations:
parsing the first relevant information to determine that a failure type of the access failure of the terminal is handover to a wrong cell or inter-system mobility failure caused by voice fallback; and
transmitting the third relevant information to the source network-side device, where the third relevant information includes indication information indicating that the failure type is handover to the wrong cell or inter-system mobility failure caused by voice fallback.

Optionally, the transceiver is further configured to: receive a failure indication transmitted by the second target network-side device, where the failure indication includes the first relevant information.

In the embodiment, the bus architecture may include any number of interconnected buses and bridges. Specifically one or more processors represented by the processor and various circuits of the memory represented by the memory are linked together. The bus architecture may also link various other circuits such as peripheral devices, voltage regulators, power management circuits, etc., which are well-known in the art, and therefore, no further descriptions are provided herein. The transceiver may be a plurality of elements, including a transmitter and a transceiver, providing a unit for communicating with various other devices over a transmission medium. The processor is responsible for managing the bus architecture and general processing, and the memory stores data used by the processor when performing operations.

The processor may be a CPU, ASIC, FPGA or CPLD, and the processor may also adopt a multi-core architecture.

It should be noted here that the above-mentioned terminal provided by the embodiments of this application may implement all the method steps implemented by the above-mentioned method embodiments applied to the first target network-side device, and can achieve the same technical effect. Therefore, the part and beneficial effects of this embedment that are the same as the method embodiments will not be described here in detail.

In addition, specific embodiments of this application further provide a processor-readable storage medium, which stores a computer program, and the computer program is configured to enable a processor to execute steps of the above information processing method for voice fallback, or the above information processing method for voice fallback, and the same technical effects can be achieved. Therefore, the description and the beneficial effect of these embodiments that are the same as the method embodiments will not be introduced here in detail. The processor readable storage medium may be any available medium or data storage device that can be accessed by the processor, including but not limited to magnetic storage (such as floppy disk, hard disk, magnetic tape, magneto-optical disk (Magneto-Optical, MO)), optical storage (such as compact disc (Compact Disk, CD), digital versatile disc (Digital Versatile Disc, DVD), blue-ray disc (Blu-ray Disc, BD), high-definition versatile disc (High-Definition Versatile Disc, HVD)), and semiconductor memory (such as ROM, erasable programmable read-only memory (Erasable Programmable Read-Only Memory, EPROM), electrically erasable programmable read-only memory (Electrically Erasable Programmable Read-Only Memory, EEPROM), non-volatile memory (NAND FLASH), solid-state drive (SSD)), etc.

Those skilled in the art should appreciate that the embodiments of this application may be provided as a method, a system, or a computer program product. Therefore, this application may take the form of complete hardware embodiments, complete software embodiments, or embodiments combining software and hardware. Moreover, this application may take the form of a computer program product implemented on one or more computer usable storage media (including but not limited to magnetic disk storage, optical storage, etc.) including a computer usable program code.

This application is described with reference to the flow chart and/or the block diagram of the method, device (system), and computer program product according to the embodiments of this application. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

Those skilled in the art can clearly understand that, for the sake of easiness and conciseness of description, reference can be made to the corresponding processes in the foregoing method embodiments for specific operating processes of the systems, the devices and the units described above, and a repeated description thereof is omitted herein.

It should be understood that in the embodiments according to this application, the disclosed device and method may be implemented in other ways. For example, the described embodiments directed to the device are merely exemplary. For example, the units are divided merely in logical function, which may be divided in another way in actual implementation, e.g., multiple units or components may be combined or integrated into another device, or some features may be ignored or not performed. In addition, the disclosed or discussed mutual coupling or direct coupling or communication connection may be an indirect coupling or communication connection through some interfaces, devices or units, which may be implemented in electronic, mechanical or other forms.

The units described as separate components may or may not be physically separated, and the components shown as units may or may not be physical units, that is, they may be located in one place or distributed over multiple network units. Some or all of the units may be selected according to practical needs to achieve the object of the technical solutions of the embodiments of this application.

In addition, functional units in various embodiments of this application may be integrated into one processing unit, or may be physically independent, or two or more units may be integrated into one unit.

Apparently, a person of ordinary skills in the art can make various modifications and variations to this application without departing from the spirit and scope of this application. In this way, if these modifications and variations of this application fall within the scope of the claims and their equivalent technologies, this application also intends to include these modifications and variations.

## Claims

1. An information processing method for voice fallback, comprising:
recording, by a terminal, first relevant information of a failure, in a case that the terminal accesses a first target network-side device and the failure occurs, wherein the first target network-side device is a network device that the terminal requests access due to inter-system voice fallback; and
transmitting, by the terminal, the first relevant information to a second target network-side device, wherein the second target network-side device is a network device that the terminal successfully accesses after the failure occurs to access to the first target network-side device.

2. The method according to claim 1, wherein the case that the terminal accesses the first target network-side device and the failure occurs comprises one of the following:
the terminal successfully handovers from a source network-side device to the first target network-side device, and a radio link failure (RLF) occurs within a first duration;
after the terminal enters an RRC_idle state by releasing a radio resource control (RRC) connection with a source network-side device, the terminal successfully redirects to the first target network-side device, and an RLF occurs within a first duration;
a handover failure occurs during the terminal handovers from a source network-side device to the first target network-side device;
after the terminal enters an RRC_idle state by releasing an RRC connection with a source network-side device, a failure occurs during a process of initiating random access to the first target network-side device,
wherein the source network-side device is a network-side device that is accessed by the terminal before performing inter-system voice fallback.

3. The method according to claim 1, wherein the first relevant information comprises at least one of the following:
an identification of the first target network-side device;
an identification of a source network-side device that is accessed by the terminal before performing inter-system voice fallback;
an identification of the second target network-side device;
carrier information of the first target network-side device;
a priority of the first target network-side device; or
voice fallback indication.

4. The method according to claim 1, wherein the recording the first relevant information of the access failure comprises:
recording the first relevant information of the failure according to a defined coding format, wherein the defined coding format comprises one of the following:
a network coding format corresponding to a mobile communication system to which a source network-side device that is accessed by the terminal before performing inter-system voice fallback belongs;
a network coding format corresponding to a mobile communication system to which the first target network-side device belongs;
a network coding format corresponding to a mobile communication system to which the second target network-side device belongs.

5. The method according to claim 1, further comprising:
receiving a handover command or an RRC release message that carries voice fallback indication; and
accessing the first target network-side device from a source network-side device that is currently accessed, according to the handover command or the RRC release message.

6. A network optimization method for voice fallback, comprising:
receiving, by a source network-side device, first relevant information of a terminal access failure transmitted by a target network-side device, wherein the first relevant information is relevant information recorded by a terminal when an access failure occurs in performing inter-system voice fallback; and
performing, by the source network-side device, network optimization on a voice fallback related parameter according to the first relevant information.

7. The method according to claim 6, wherein the receiving, by the source network-side device, the first relevant information of the terminal access failure transmitted by the target network-side device comprises:
receiving, by the source network-side device, second relevant information transmitted by a second target network-side device, wherein the second relevant information comprises the first relevant information; and/or receiving third relevant information transmitted by a first target network-side device, wherein the third relevant information comprises the first relevant information,
wherein the first target network-side device is a network device that the terminal requests access due to inter-system voice fallback, and the second target network-side device is a network device that the terminal successfully accesses after the failure occurs to access to the first target network-side device.

8. The method according to claim 7, wherein the second relevant information and/or the third relevant information further comprises: indication information indicating that a failure type is handover to a wrong cell,
the performing, by the source network-side device, network optimization on the voice fallback related parameter according to the first relevant information comprises:
parsing the second relevant information and/or the third relevant information to determine that the failure type of the access failure is handover to the wrong cell; and
performing network optimization on the voice fallback related parameter according to the first relevant information, wherein an optimized network parameter is used to prioritize handover the terminal to a network-side device other than the first target network-side device when performing inter-system voice fallback.

9. The method according to claim 7, wherein the second relevant information and/or the third relevant information further comprises: indication information indicating that a failure type is inter-system mobility failure during voice fallback,
the performing, by the source network-side device, network optimization on the voice fallback related parameter according to the first relevant information comprises:
parsing the second relevant information and/or the third relevant information to determine that the failure type of the access failure is inter-system mobility failure during voice fallback; and
performing network optimization on the voice fallback related parameter according to the first relevant information, wherein an optimized network parameter is used to prioritize handover the terminal to a network-side device other than the first target network-side device when performing inter-system voice fallback.

10. The method according to claim 6, wherein the first relevant information comprises at least one of the following:
an identification of a first target network-side device;
an identification of the source network-side device;
an identification of a second target network-side device;
carrier information of a first target network-side device;
a priority of a first target network-side device; or
voice fallback indication.

11. An information processing method for voice fallback, comprising:
receiving, by a second target network-side device, first relevant information transmitted by a terminal, wherein the first relevant information is relevant information recorded by a terminal when an access failure occurs in performing inter-system voice fallback; and
transmitting, by the second target network-side device according to the first relevant information, second relevant information of the access failure of the terminal to a source network-side device that is accessed by the terminal before performing inter-system voice fallback, wherein the second relevant information comprises the first relevant information; and/or, transmitting the first relevant information to a first target network-side device,
wherein the first target network-side device is a network device that the terminal requests access due to inter-system voice fallback.

12. The method according to claim 11, wherein the transmitting, according to the first relevant information, the second relevant information of the access failure of the terminal to the source network-side device that is accessed by the terminal before performing inter-system voice fallback comprises:
parsing the first relevant information to determine that a failure type of the access failure of the terminal is handover to a wrong cell; and
transmitting the second relevant information to the source network-side device, wherein the second relevant information comprises indication information indicating that the failure type is handover to the wrong cell.

13. The method according to claim 11, wherein the transmitting, according to the first relevant information, the second relevant information of the access failure of the terminal to the source network-side device that is accessed by the terminal before performing inter-system voice fallback comprises:
parsing the first relevant information to determine that the failure type of the access failure of the terminal is inter-system mobility failure during voice fallback; and
transmitting the second relevant information to the source network-side device, wherein the second relevant information comprises indication information indicating that the failure type is inter-system mobility failure during voice fallback.

14. The method according to claim 11, wherein the transmitting, according to the first relevant information, the second relevant information of the access failure of the terminal to the source network-side device that is accessed by the terminal before performing inter-system voice fallback comprises:
transmitting the second relevant information through a first interface to the source network-side device that is accessed by the terminal before performing inter-system voice fallback.

15. The method according to claim 11, wherein the transmitting the first relevant information to the first target network-side device comprises:
transmitting a failure indication to the first target network-side device, wherein the failure indication comprises the first relevant information.

16. An information processing method for voice fallback, comprising:
receiving, by a first target network-side device, first relevant information transmitted by a second target network-side device, wherein the first relevant information is relevant information recorded by a terminal when an access failure occurs in performing inter-system voice fallback; and
transmitting, by the first target network-side device according to the first relevant information, third relevant information of the access failure of the terminal to a source network-side device that is accessed by the terminal before performing inter-system voice fallback, wherein the third relevant information comprises the first relevant information,
wherein the second target network-side device is a network device that the terminal successfully accesses after a failure occurs to access to the first target network-side device.

17. The method according to claim 16, wherein the transmitting, according to the first relevant information, the third relevant information of the access failure of the terminal to the source network-side device that is accessed by the terminal before performing inter-system voice fallback comprises:
parsing the first relevant information to determine that a failure type of the access failure of the terminal is handover to a wrong cell; and
transmitting the third relevant information to the source network-side device, wherein the third relevant information comprises indication information indicating that the failure type is handover to the wrong cell.

18. The method according to claim 16, wherein the transmitting, according to the first relevant information, the third relevant information of the access failure of the terminal to the source network-side device that is accessed by the terminal before performing inter-system voice fallback comprises:
parsing the first relevant information to determine that a failure type of the access failure of the terminal is inter-system mobility failure during voice fallback; and
transmitting the third relevant information to the source network-side device, wherein the third relevant information comprises indication information indicating that the failure type is inter-system mobility failure during voice fallback.

19. The method according to claim 16, wherein the receiving the first relevant information transmitted by the second target network-side device comprises:
receiving a failure indication transmitted by the second target network-side device, wherein the failure indication comprises the first relevant information.

20. A terminal, comprising: a memory, a transceiver and a processor,
wherein the memory is configured to store a computer program; the transceiver is configured to transmit and receive data under the control of the processor; the processor is configured to read the computer program in the memory to perform the following operations: recording first relevant information of a failure in a case that the terminal accesses a first target network-side device and the failure occurs, wherein the first target network-side device is a network device that the terminal requests access due to inter-system voice fallback; and
the transceiver is configured to: transmit the first relevant information to a second target network-side device, wherein the second target network-side device is a network device that the terminal successfully accesses after the failure occurs to access to the first target network-side device.

21. The terminal according to claim 20, wherein the case that the terminal accesses the first target network-side device and the failure occurs comprises one of the following:
the terminal successfully handovers from a source network-side device to the first target network-side device, and a radio link failure (RLF) occurs within a first duration;
after the terminal enters an RRC_idle state by releasing a radio resource control (RRC) connection with a source network-side device, the terminal successfully redirects to the first target network-side device, and an RLF occurs within a first duration;
a handover failure occurs when the terminal handovers from a source network-side device to the first target network-side device;
after the terminal enters an RRC_idle state by releasing an RRC connection with a source network-side device, a failure occurs during a process of initiating random access to the first target network-side device,
wherein the source network-side device is a network-side device that is accessed by the terminal before performing inter-system voice fallback.

22. The terminal according to claim 20, wherein the first relevant information comprises at least one of the following:
an identification of the first target network-side device;
an identification of a source network-side device that is accessed by the terminal before performing inter-system voice fallback;
an identification of the second target network-side device;
carrier information of the first target network-side device;
a priority of the first target network-side device; or
voice fallback indication.

23. The terminal according to claim 20, wherein the processor is further configured to read the computer program in the memory to perform the following operations:
recording the first relevant information of the failure according to a defined coding format, wherein the defined coding format comprises one of the following:
a network coding format corresponding to a mobile communication system to which a source network-side device that is accessed by the terminal before performing inter-system voice fallback belongs;
a network coding format corresponding to a mobile communication system to which the first target network-side device belongs;
a network coding format corresponding to a mobile communication system to which the second target network-side device belongs.

24. The terminal according to claim 20, wherein the transceiver is configured to transmit and receive data under the control of the processor to perform the following operations:
receiving a handover command or an RRC release message that carries voice fallback indication; and
accessing the first target network-side device from a source network-side device that is currently accessed, according to the handover command or the RRC release message.

25. A network-side device, comprising a memory, a transceiver and a processor,
wherein the memory is configured to store a computer program; the processor is configured to read the computer program in the memory; the transceiver is configured to transmit and receive data under the control of the processor to perform the following operations: receiving first relevant information of a terminal access failure transmitted by a target network-side device, wherein the first relevant information is relevant information recorded by a terminal when an access failure occurs in performing inter-system voice fallback;
the processor is configured to read the computer program in the memory to perform the following operations: performing network optimization on a voice fallback related parameter according to the first relevant information.

26. The network-side device according to claim 25, wherein the transceiver is specifically configured to transmit and receive data under the control of the processor to perform the following operations:
receiving second relevant information transmitted by a second target network-side device, wherein the second relevant information comprises the first relevant information; and/or receiving third relevant information transmitted by a first target network-side device, wherein the third relevant information comprises the first relevant information,
wherein the first target network-side device is a network device that the terminal requests access due to inter-system voice fallback, and the second target network-side device is a network device that the terminal successfully accesses after the failure occurs to access to the first target network-side device.

27. The network-side device according to claim 26, wherein the second relevant information and/or the third relevant information further comprises: indication information indicating that a failure type is handover to a wrong cell,
the processor is specifically configured to read the computer program in the memory to perform the following operations:
parsing the second relevant information and/or the third relevant information to determine that the failure type of the access failure is handover to the wrong cell; and
performing network optimization on the voice fallback related parameter according to the first relevant information, wherein an optimized network parameter is used to prioritize handover the terminal to a network-side device other than the first target network-side device when performing inter-system voice fallback.

28. The network-side device according to claim 26, wherein the second relevant information and/or the third relevant information further comprises: indication information indicating that a failure type is inter-system mobility failure during voice fallback,
the processor is specifically configured to read the computer program in the memory to perform the following operations:
parsing the second relevant information and/or the third relevant information, and determining that the failure type of the access failure is inter-system mobility failure during voice fallback; and
performing network optimization on the voice fallback related parameter according to the first relevant information, wherein an optimized network parameter is used to prioritize handover the terminal to a network-side device other than the first target network-side device when performing inter-system voice fallback.

29. The network-side device according to claim 25, wherein the first relevant information comprises at least one of the following:
an identification of a first target network-side device;
an identification of the source network-side device;
an identification of a second target network-side device;
carrier information of a first target network-side device;
a priority of a first target network-side device; or
voice fallback indication.

30. A network-side device, comprising a memory, a transceiver and a processor,
wherein the memory is configured to store a computer program; the processor is configured to read the computer program in the memory; the transceiver is configured to transmit and receive data under the control of the processor to perform the following operations:
receiving first relevant information transmitted by a terminal, wherein the first relevant information is relevant information recorded by a terminal when an access failure occurs in performing inter-system voice fallback; and
transmitting, according to the first relevant information, second relevant information of the access failure of the terminal to a source network-side device that is accessed by the terminal before performing inter-system voice fallback, wherein the second relevant information comprises the first relevant information; and/or, transmitting the first relevant information to a first target network-side device,
wherein the first target network-side device is a network device that the terminal requests access due to inter-system voice fallback.

31. The network-side device according to claim 30, wherein the processor is configured to read the computer program in the memory to perform the following operations: parsing the first relevant information to determine that a failure type of the access failure of the terminal is handover to a wrong cell; and
the transceiver is configured to transmit and receive data under the control of the processor to perform the following operations: transmitting the second relevant information to the source network-side device, wherein the second relevant information comprises indication information indicating that the failure type is handover to the wrong cell.

32. The network-side device according to claim 30, wherein the processor is configured to read the computer program in the memory to perform the following operations: parsing the first relevant information to determine that the failure type of the access failure of the terminal is inter-system mobility failure during voice fallback; and
the transceiver is configured to transmit and receive data under the control of the processor to perform the following operations: transmitting the second relevant information to the source network-side device, wherein the second relevant information comprises indication information indicating that the failure type is inter-system mobility failure during voice fallback.

33. The network-side device according to claim 30, wherein the transceiver is configured to transmit and receive data under the control of the processor to perform the following operations:
transmitting the second relevant information through a first interface to the source network-side device that is accessed by the terminal before performing inter-system voice fallback.

34. The network-side device according to claim 30, wherein the transceiver is configured to transmit and receive data under the control of the processor to perform the following operations:
transmitting a failure indication to the first target network-side device, wherein the failure indication comprises the first relevant information.

35. A network-side device, comprising a memory, a transceiver and a processor,
wherein the memory is configured to store a computer program; the processor is configured to read the computer program in the memory; the transceiver is configured to transmit and receive data under the control of the processor to perform the following operations:
receiving first relevant information transmitted by a second target network-side device, wherein the first relevant information is relevant information recorded by a terminal when an access failure occurs in performing inter-system voice fallback; and
transmitting, according to the first relevant information, third relevant information of the access failure of the terminal to a source network-side device that is accessed by the terminal before performing inter-system voice fallback, wherein the third relevant information comprises the first relevant information,
wherein the second target network-side device is a network device that the terminal successfully accesses after the failure occurs to access to the first target network-side device.

36. The network-side device according to claim 35, wherein the processor is configured to read the computer program in the memory to perform the following operations: parsing the first relevant information to determine that a failure type of the access failure of the terminal is handover to a wrong cell; and
the transceiver is specifically configured to transmit and receive data under the control of the processor to perform the following operations: transmitting the third relevant information to the source network-side device, wherein the third relevant information comprises indication information indicating that the failure type is handover to the wrong cell.

37. The network-side device according to claim 35, wherein the processor is configured to read the computer program in the memory to perform the following operations: parsing the first relevant information to determine that a failure type of the access failure of the terminal is inter-system mobility failure during voice fallback;
the transceiver is specifically configured to transmit and receive data under the control of the processor to perform the following operations: transmitting the third relevant information to the source network-side device, wherein the third relevant information comprises indication information indicating that the failure type is inter-system mobility failure during voice fallback.

38. The network-side device according to claim 35, wherein the transceiver is configured to transmit and receive data under the control of the processor to perform the following operations:
receiving a failure indication transmitted by the second target network-side device, wherein the failure indication comprises the first relevant information.

39. An information processing apparatus for voice fallback, comprising:
a recording unit, configured to record first relevant information of a failure in a case that a terminal accesses a first target network-side device and the failure occurs, wherein the first target network-side device is a network device that the terminal requests access due to inter-system voice fallback; and
a first transmitting unit, configured to transmit the first relevant information to a second target network-side device, wherein the second target network-side device is a network device that the terminal successfully accesses after the failure occurs to access to the first target network-side device.

40. A network optimization apparatus for voice fallback, comprising:
a first receiving unit, configured to receive first relevant information of a terminal access failure transmitted by a target network-side device, wherein the first relevant information is relevant information recorded by a terminal when an access failure occurs in performing inter-system voice fallback; and
a processing unit, configured to perform network optimization on a voice fallback related parameter according to the first relevant information.

41. An information processing apparatus for voice fallback, comprising:
a second receiving unit, configured to receive first relevant information transmitted by a terminal, wherein the first relevant information is relevant information recorded by a terminal when an access failure occurs in performing inter-system voice fallback; and
a second transmitting unit, configured to transmit, according to the first relevant information, second relevant information of the access failure of the terminal to a source network-side device that is accessed by the terminal before performing inter-system voice fallback, wherein the second relevant information comprises the first relevant information; and/or, transmitting the first relevant information to a first target network-side device,
wherein the first target network-side device is a network device that the terminal requests access due to inter-system voice fallback.

42. An information processing apparatus for voice fallback, comprising:
a third receiving unit, configured to receive first relevant information transmitted by a second target network-side device, wherein the first relevant information is relevant information recorded by a terminal when an access failure occurs in performing inter-system voice fallback; and
a third transmitting unit, configured to transmit, according to the first relevant information, third relevant information of the access failure of the terminal to a source network-side device that is accessed by the terminal before performing inter-system voice fallback, wherein the third relevant information comprises the first relevant information,
wherein the second target network-side device is a network device that the terminal successfully accesses after the failure occurs to access to the first target network-side device.

43. A processor-readable storage medium, storing a computer program thereon, wherein the computer program is executed by a processor to implement steps of the information processing method for voice fallback according to any one of claims 1 to 5, or to implement steps of the network optimization method for voice fallback according to any one of claims 6 to 10, or to implement steps of the information processing method for voice fallback according to any one of claims 11 to 19.
